# EUROPEAN PATENT APPLICATION

(11) **EP 4 583 438 A1**
(43) Date of publication of application: **09.07.2025**
(21) Application number: 23870815.0
(22) Date of filing: 26.09.2023
(51) Int. Cl.: H04L 1/1812

(54) **COMMUNICATION METHOD AND COMMUNICATION APPARATUS**

(30) Priority: 30.09.2022 CN 202211213243
(71) Applicant: Huawei Technologies Co., Ltd., Shenzhen, Guangdong 518129 (CN)
(72) Inventor: WU, Hao, Shenzhen, Guangdong 518129 (CN); PENG, Wenjie, Shenzhen, Guangdong 518129 (CN)
(74) Representative: Goddar, Heinz J.
(86) International application number: PCT/CN2023/121570
(87) International publication number: WO 2024/067587

(57) **Abstract**

Embodiments of this application provide a communication method and a communication apparatus. The communication method includes: A first terminal device sends first information to a second terminal device, where the first information is carried on a PSSCH, and the PSSCH corresponds to at least two candidate physical sidelink feedback channel PSFCH resources; and the first terminal device determines, based on second information and/or third information, that discontinuous transmission DTX occurs, where the second information is that the first terminal device does not receive HARQ feedback information at positions of the at least two candidate PSFCH resources; and the third information is that the first terminal device does not receive the HARQ feedback information in a first time period. Therefore, the first terminal device can determine, based on whether the HARQ feedback information corresponding to the PSSCH is received at positions of all PSFCH resources corresponding to PSSCH resources and/or in the first time period, whether the DTX occurs, thereby improving SL communication quality.

## Description

This application claims priority to Chinese Patent Application No. 202211213243.4, filed with the China National Intellectual Property Administration on September 30, 2022 and entitled "COMMUNICATION METHOD AND COMMUNICATION APPARATUS", which is incorporated herein by reference in its entirety.

### TECHNICAL FIELD

Embodiments of this application relate to the field of wireless communication technologies, and more specifically, to a communication method and a communication apparatus.

### BACKGROUND

In a scenario in which a terminal device (user equipment, UE) communicates with a base station, used spectrum resources are classified into licensed spectrums and unlicensed spectrums. A licensed spectrum is a spectrum resource allocated by each country to each operator in the country according to an international rule and planning of the country. An unlicensed spectrum is a shared spectrum, and can be used by different operators/organizations. To fairly use an unlicensed spectrum, a UE and a network device need to perform a listen before talk (listen before talk, LBT) process before sending data, to contend for using an unlicensed spectrum resource.

For sidelink (sidelink, SL) licensed spectrum transmission, after sending a physical sidelink shared channel (physical sidelink shared channel, PSSCH), a transmission terminal device (transmission UE, TX UE) receives hybrid automatic repeat request (hybrid automatic repeat request, HARQ) feedback information from a reception terminal device (reception UE, RX UE) at a physical sidelink feedback channel (physical sidelink feedback channel, PSFCH) resource position corresponding to the PSSCH. If the TX UE does not receive or detect the HARQ information fed back by the RX UE at the PSFCH resource position, the TX UE considers that one time of sidelink discontinuous transmission (sidelink discontinuous transmission, SL DTX) occurs.

Therefore, for an SL-U multi-PSFCH mechanism, how to improve SL communication quality is an urgent problem to be resolved.

### SUMMARY

Embodiments of this application provide a communication method, to determine whether SL DTX occurs by detecting HARQ feedback statuses corresponding to all PSFCHs in a multi-PSFCH mechanism, to avoid a problem that in the SL-U multi-PSFCH transmission mechanism, a TX UE incorrectly determines that a HARQ feedback failure caused by an LBT failure of a PSFCH resource is the SL DTX, thereby improving SL communication quality.

According to a first aspect, a communication method is provided. The method may be performed by a first terminal device, or may be performed by a component (for example, a chip or a circuit) of the first terminal device. This is not limited. For ease of description, the following uses an example in which the method is performed by the first terminal device for description.

The method may include: The first terminal device sends first information to a second terminal device, where the first information is carried on a physical sidelink shared channel PSSCH, the first terminal device is connected to the second terminal device through a sidelink, the PSSCH corresponds to at least two candidate physical sidelink feedback channel PSFCH resources, and the at least two candidate PSFCH resources are used to send hybrid automatic repeat request HARQ feedback information corresponding to the PSSCH; and the first terminal device determines, based on second information and/or third information, that discontinuous transmission DTX occurs, where the second information is that the first terminal device does not receive the HARQ feedback information at positions of the at least two candidate PSFCH resources; and the third information is that the first terminal device does not receive the HARQ feedback information in a first time period, and the first time period indicates a time domain range of the at least two candidate PSFCH resources.

It should be understood that the first time period indicating the time domain range of the at least two candidate PSFCH resources may be understood as that the first time period indicates the positions of the at least two candidate PSFCH resources.

Based on the foregoing solution, in an unlicensed spectrum multi-PSFCH scenario, the first terminal device can determine, based on whether the HARQ feedback information corresponding to the PSSCH is received at positions of all PSFCH resources corresponding to PSSCH resources and/or in the first time period, whether the DTX occurs. In comparison with the conventional technology in which it is determined that DTX occurs when HARQ feedback information of a PSFCH is not received only once, thereby improving accuracy of determining the DTX, and improving SL communication quality.

In a possible implementation, the HARQ feedback information includes identification information of the PSSCH. Specifically, the identification information of the PSSCH includes any one of the following: a time domain resource position of the PSSCH, identification information of the first terminal device, and a PSFCH check code.

In a possible implementation, the method may further include: The first terminal device determines, based on the identification information of the PSSCH, the PSSCH corresponding to the first time period.

Based on the foregoing solution, the first terminal device can determine, based on the identification information of the PSSCH in the HARQ feedback information, the PSSCH corresponding to the HARQ feedback information, so that whether the DTX occurs in current PSSCH transmission can be determined based on whether the HARQ feedback information is received.

In a possible implementation, that the PSSCH corresponds to the at least two candidate PSFCH resources includes: The first terminal device determines the positions of the at least two candidate PSFCH resources; the first terminal device sends first indication information to the second terminal device, where the first indication information indicates the positions of the at least two candidate PSFCH resources corresponding to the PSSCH; or the first terminal device obtains second indication information, where the second indication information indicates that the PSSCH corresponds to the at least two candidate PSFCH resources; or the first terminal device obtains a mapping relationship, where the mapping relationship is a correspondence between the PSSCH and the at least two candidate PSFCH resources, and the first terminal device determines the at least two candidate PSFCH resources based on the mapping relationship.

Based on the foregoing solution, the first terminal device can learn, based on an indication manner, a mapping manner, or a manner determined by the first terminal device, that the PSSCH corresponds to the at least two candidate PSFCH resources, thereby increasing diversity of solutions for learning that the PSSCH corresponds to the at least two candidate PSFCH resources.

In a possible implementation, the method further includes: The first terminal device receives third indication information from the second terminal device, where the third indication information indicates that the LBT detection performed by the second terminal device fails.

Based on the foregoing solution, the first terminal device can learn, based on the third indication information from the second terminal device, that the second terminal device cannot send the HARQ feedback information because continuous LBT failures occur.

In a possible implementation, the method further includes: The first terminal device cancels DTX counting on the PSSCH based on the third indication information.

Based on the foregoing solution, the first terminal device can determine, based on the third indication information, that the DTX does not occur in current PSSCH transmission, thereby improving accuracy of determining the DTX.

In a possible implementation, the method further includes: The first terminal device determines, based on the third indication information, that a reason for not receiving the HARQ feedback information at the positions of the at least two candidate PSFCH resources is that the LBT detection performed by the second terminal device fails.

In a possible implementation, the method further includes: The first terminal device determines a start moment of the first time period.

In a possible implementation, that the first terminal device determines a start moment of the first time period includes: The first terminal device determines the start moment of the first time period based on a time domain position of the PSSCH.

In a possible implementation, that the first terminal device determines a start moment of the first time period includes: The first terminal device determines that the start moment of the first time period is in one slot after the PSSCH; and the first terminal device sends fourth indication information to the second terminal device, where the fourth indication information indicates the start moment of the first time period.

In a possible implementation, the start moment of the first time period is in any one of the following: a slot in which the PSSCH is located, a 1^{st} symbol in the slot in which the PSSCH is located, a 1^{st} slot after the PSSCH, a 1^{st} symbol in a slot after the PSSCH, a slot in which a last candidate PSFCH corresponding to the PSSCH is located, a 1^{st} symbol in the slot in which the last candidate PSFCH corresponding to the PSSCH is located, a 1^{st} slot after the last candidate PSFCH corresponding to the PSSCH, and a 1^{st} symbol in a slot after the last candidate PSFCH corresponding to the PSSCH.

Based on the foregoing solution, the start moment of the first time period may be a plurality of time domain positions, thereby increasing flexibility of the solution for determining the start moment of the first time period.

In a possible implementation, the method further includes: The first terminal device starts timing at the start moment of the first time period or at the time domain position of the PSSCH.

Based on the foregoing solution, the first terminal device can start timing at the plurality of time domain positions, thereby increasing diversity of timing solutions.

In a possible implementation, the method further includes: The first terminal device starts timing from the start moment of the first time period, and determines that timeout occurs when a time difference exceeds the first time period.

In a possible implementation, the method further includes: The first terminal device starts timing in the slot in which the PSSCH is located, or the 1^{st} symbol in the slot in which the PSSCH is located, or the 1^{st} slot after the PSSCH, or the 1^{st} symbol in the slot after the PSSCH, and the first terminal device determines that timeout occurs when a time difference exceeds the first time period.

In a possible implementation, the method further includes: The first terminal device stops timing when receiving the HARQ feedback information in the first time period.

In a possible implementation, the method further includes: The first terminal device determines a duration of the first time period.

Based on the foregoing solution, the first terminal device may determine the duration of the first time period, thereby increasing diversity of solutions for determining the duration of the first time period.

In a possible implementation, the method further includes: The first terminal device sends the duration of the first time period to the second terminal device.

Based on the foregoing solution, the first terminal device may notify the second terminal device of the determined duration of the first time period, thereby increasing diversity of solutions for determining the duration of the first time period.

In a possible implementation, the method further includes: The first terminal device receives the duration of the first time period from the second terminal device.

Based on the foregoing solution, the first terminal device may receive the duration, of the first time period, determined by the second terminal device, thereby increasing diversity of solutions for determining the duration of the first time period.

According to a second aspect, a communication method is provided. The method may be performed by a second terminal device, or may be performed by a component (for example, a chip or a circuit) of the second terminal device. This is not limited. For ease of description, the following uses an example in which the method is performed by the second terminal device for description.

The method may include: The second terminal device receives first information from a first terminal device, where the first information is carried on a physical sidelink shared channel PSSCH, the first terminal device is connected to the second terminal device through a sidelink, the PSSCH corresponds to at least two candidate physical sidelink feedback channel PSFCH resources, and the at least two candidate PSFCH resources are used to send hybrid automatic repeat request HARQ feedback information corresponding to the PSSCH; and the second terminal device determines whether to send the HARQ feedback information to the first terminal device in a first time period, where the first time period indicates a time domain range of the at least two candidate PSFCH resources. Based on the foregoing solution, in an unlicensed spectrum multi-PSFCH scenario, the second terminal device can determine whether to send the HARQ feedback information to the first terminal device at a position of a PSFCH resource corresponding to a PSSCH resource and/or in the first time period, so that the first terminal device determines, based on whether the HARQ feedback information corresponding to the PSSCH is received at positions of all PSFCH resources corresponding to PSSCH resources and/or in the first time period, whether DTX occurs. In comparison with the conventional technology in which it is determined that DTX occurs when HARQ feedback information of a PSFCH is not received only once, thereby improving accuracy of determining the DTX, and improving SL communication quality.

In a possible implementation, the HARQ feedback information includes identification information of the PSSCH. Specifically, the identification information of the PSSCH includes any one of the following: a time domain resource position of the PSSCH, identification information of the first terminal device, and a PSFCH check code.

Based on the foregoing solution, the HARQ feedback information sent by the second terminal device includes the identification information of the PSSCH, and the PSSCH corresponding to the HARQ feedback information can be determined based on the identification information of the PSSCH.

In a possible implementation, that the PSSCH corresponds to the at least two candidate PSFCH resources includes: The second terminal device receives first indication information from the first terminal device, where the first indication information indicates positions of the at least two candidate PSFCH resources corresponding to the PSSCH; or the second terminal device obtains second indication information, where the second indication information indicates that the PSSCH corresponds to the at least two candidate PSFCH resources; or the second terminal device obtains a mapping relationship, where the mapping relationship is a correspondence between the PSSCH and the at least two candidate PSFCH resources; and the second terminal device determines the at least two candidate PSFCH resources based on the mapping relationship.

Based on the foregoing solution, the second terminal device can learn, based on an indication manner, a mapping manner, or a manner determined by the first terminal device, that the PSSCH corresponds to the at least two candidate PSFCH resources, thereby increasing diversity of solutions for learning that the PSSCH corresponds to the at least two candidate PSFCH resources.

In a possible implementation, that the second terminal device determines whether to send the HARQ feedback information to the first terminal device includes: The second terminal device determines whether to send the HARQ feedback information to the first terminal device at the positions of the at least two candidate PSFCH resources and/or in the first time period.

In a possible implementation, that the second terminal device determines whether to send the HARQ feedback information to the first terminal device in a first time period includes: The second terminal device performs LBT detection on the at least two candidate PSFCH resources corresponding to the PSSCH, and sends the HARQ feedback information at a position of a candidate PSFCH resource on which the LBT detection succeeds.

Based on the foregoing solution, the second terminal device determines, by performing LBT detection on all candidate PSFCH resources, whether to send the HARQ feedback information to the first terminal device, thereby increasing a quantity of times that the second terminal device sends the HARQ feedback information.

In a possible implementation, that the second terminal device determines whether to send the HARQ feedback information to the first terminal device in a first time period includes: The second terminal device performs, in a time sequence, LBT detection on the at least two candidate PSFCH resources corresponding to the PSSCH, and sends the HARQ feedback information at a position of a 1^{st} candidate PSFCH resource on which the LBT detection succeeds; and the second terminal device stops the LBT detection.

Based on the foregoing solution, the second terminal device determines, by performing LBT detection on all candidate PSFCH resources in a time sequence, whether to send the HARQ feedback information to the first terminal device, thereby increasing a quantity of times that the second terminal device sends the HARQ feedback information.

In a possible implementation, that the second terminal device determines whether to send the HARQ feedback information to the first terminal device in a first time period includes: When the LBT detection performed by the second terminal device on the at least two candidate PSFCH resources corresponding to the PSSCH fails, the second terminal device determines at least one first PSFCH in the first time period; the second terminal device performs LBT detection on the at least one first PSFCH resource, and sends the HARQ feedback information at a position of a first PSFCH resource on which the LBT detection succeeds; or the second terminal device performs LBT detection on the at least one first PSFCH resource in a time sequence, and sends the HARQ feedback information at a position of a 1^{st} first PSFCH resource on which the LBT detection succeeds; and the second terminal device stops the LBT detection.

Based on the foregoing solution, when the LBT detection performed by the second terminal device on all candidate PSFCH resources fails, the second terminal device can determine a plurality of PSFCHs in one first time period, and then perform LBT detection on the plurality of PSFCHs in the first time period to determine whether to send the HARQ feedback information to the first terminal device, thereby increasing a quantity of times that the second terminal device sends the HARQ feedback information.

In a possible implementation, that the second terminal device determines whether to send the HARQ feedback information to the first terminal device in a first time period includes: The second terminal device performs, in the first time period starting from a start moment of the first time period, LBT detection on the at least two candidate PSFCH resources corresponding to the PSSCH, and sends the HARQ feedback information at a position of a candidate PSFCH resource on which the LBT detection succeeds.

Based on the foregoing solution, the second terminal device determines, by performing LBT detection on all candidate PSFCH resources in the first time period, whether to send the HARQ feedback information to the first terminal device, thereby increasing a quantity of times that the second terminal device sends the HARQ feedback information.

In a possible implementation, that the second terminal device determines whether to send the HARQ feedback information to the first terminal device in a first time period includes: The second terminal device performs, in a time sequence in the first time period starting from a start moment of the first time period, LBT detection on the at least two candidate PSFCH resources corresponding to the PSSCH, and sends the HARQ feedback information at a position of a 1^{st} candidate PSFCH resource on which the LBT detection succeeds; and the second terminal device stops the LBT detection.

Based on the foregoing solution, the second terminal device determines, by performing LBT detection on all candidate PSFCH resources in the first time period in a time sequence, whether to send the HARQ feedback information to the first terminal device, thereby increasing a quantity of times that the second terminal device sends the HARQ feedback information.

In a possible implementation, the method further includes: The second terminal device determines a start moment of the first time period.

In a possible implementation, that the second terminal device determines a start moment of the first time period includes: The second terminal device determines the start moment of the first time period based on a time domain position of the PSSCH.

In a possible implementation, the start moment of the first time period is in any one of the following: a slot in which the PSSCH is located, a 1^{st} symbol in the slot in which the PSSCH is located, a 1^{st} slot after the PSSCH, a 1^{st} symbol in a slot after the PSSCH, a slot in which a last candidate PSFCH corresponding to the PSSCH is located, a 1^{st} symbol in the slot in which the last candidate PSFCH corresponding to the PSSCH is located, a 1^{st} slot after the last candidate PSFCH corresponding to the PSSCH, and a 1^{st} symbol in a slot after the last candidate PSFCH corresponding to the PSSCH.

Based on the foregoing solution, the start moment of the first time period may be located at a plurality of time domain positions, thereby increasing flexibility for determining the start moment of the first time period.

In a possible implementation, the method further includes: The second terminal device starts timing at the start moment of the first time period or at the time domain position of the PSSCH.

Based on the foregoing solution, the second terminal device can start timing at the plurality of time domain positions, thereby increasing diversity of timing solutions.

In a possible implementation, the method further includes: The second terminal device starts timing from the start moment of the first time period, and determines that timeout occurs when a time difference exceeds the first time period.

In a possible implementation, the method further includes: The second terminal device starts timing in the slot in which the PSSCH is located, or the 1^{st} symbol in the slot in which the PSSCH is located, or the 1^{st} slot after the PSSCH, or the 1^{st} symbol in the slot after the PSSCH, and the second terminal device determines that timeout occurs when a time difference exceeds the first time period.

In a possible implementation, the method further includes: The second terminal device determines a duration of the first time period.

Based on the foregoing solution, the second terminal device may determine the duration of the first time period, thereby increasing diversity of solutions for determining the duration of the first time period.

In a possible implementation, the method further includes: The second terminal device sends the duration of the first time period to the first terminal device.

Based on the foregoing solution, the second terminal device may notify the first terminal device of the determined duration of the first time period, thereby increasing diversity of solutions for determining the duration of the first time period.

In a possible implementation, the method further includes: The second terminal device receives the duration of the first time period from the first terminal device.

Based on the foregoing solution, the second terminal device may receive the duration, of the first time period, determined by the first terminal device, thereby increasing diversity of solutions for determining the duration of the first time period.

In a possible implementation, the method further includes: The second terminal device sends third indication information to the first terminal device, where the third indication information indicates that the LBT detection performed by the second terminal device fails.

Based on the foregoing solution, the second terminal device can notify, in a manner of sending the third indication information to the first terminal device, the first terminal device that the second terminal device cannot send the HARQ feedback information because continuous LBT failures occur.

According to a third aspect, a communication apparatus is provided. The communication apparatus includes a unit configured to perform the method according to the first aspect. The communication apparatus may be a first terminal device, or may be performed by a chip or a circuit disposed in the first terminal device. This is not limited in this application.

The communication apparatus includes:
a transceiver unit, configured to send first information to a second terminal device, where the first information is carried on a physical sidelink shared channel PSSCH, the first terminal device is connected to the second terminal device through a sidelink, the PSSCH corresponds to at least two candidate physical sidelink feedback channel PSFCH resources, and the at least two candidate PSFCH resources are used to send hybrid automatic repeat request HARQ feedback information corresponding to the PSSCH; and a processing unit, configured to determine, based on second information and/or third information, that discontinuous transmission DTX occurs, where the second information is that the first terminal device does not receive the HARQ feedback information at positions of the at least two candidate PSFCH resources; and the third information is that the first terminal device does not receive the HARQ feedback information in a first time period starting from a start moment of the first time period, and the first time period indicates a time domain range of the at least two candidate PSFCH resources.

In a possible implementation, the HARQ feedback information includes identification information of the PSSCH. Specifically, the identification information of the PSSCH includes any one of the following: a time domain resource position of the PSSCH, identification information of the first terminal device, and a PSFCH check code.

In a possible implementation, the method may further include: The first terminal device determines, based on the identification information of the PSSCH, the PSSCH corresponding to the first time period.

In a possible implementation, the processing unit is further configured to determine the positions of the at least two candidate PSFCH resources. The transceiver unit is further configured to send first indication information to the second terminal device, where the first indication information indicates the positions of the at least two candidate PSFCH resources corresponding to the PSSCH. Alternatively, the transceiver unit is further configured to obtain second indication information, where the second indication information indicates that the PSSCH corresponds to the at least two candidate PSFCH resources. Alternatively, the transceiver unit is further configured to obtain a mapping relationship, where the mapping relationship is a correspondence between the PSSCH and the at least two candidate PSFCH resources. The processing unit is further configured to determine, based on the mapping relationship, that the PSSCH corresponds to the at least two candidate PSFCH resources.

In a possible implementation, the transceiver unit is further configured to receive third indication information from the second terminal device, where the third indication information indicates that the LBT detection performed by the second terminal device fails.

In a possible implementation, the processing unit is further configured to cancel DTX counting on the PSSCH based on the third indication information.

In a possible implementation, the processing unit is further configured to determine, based on the third indication information, that a reason for not receiving the HARQ feedback information at the positions of the at least two candidate PSFCH resources is that the LBT detection performed by the second terminal device fails.

In a possible implementation, the processing unit is further configured to determine a start moment of the first time period.

In a possible implementation, the processing unit is further configured to determine the start moment of the first time period based on a time domain position of the PSSCH.

In a possible implementation, the start moment of the first time period is in any one of the following: a slot in which the PSSCH is located, a 1^{st} symbol in the slot in which the PSSCH is located, a 1^{st} slot after the PSSCH, a 1^{st} symbol in a slot after the PSSCH, a slot in which a last candidate PSFCH corresponding to the PSSCH is located, a 1^{st} symbol in the slot in which the last candidate PSFCH corresponding to the PSSCH is located, a 1^{st} slot after the last candidate PSFCH corresponding to the PSSCH, and a 1^{st} symbol in a slot after the last candidate PSFCH corresponding to the PSSCH.

In a possible implementation, the processing unit is further configured to start timing at the start moment of the first time period or at the time domain position of the PSSCH.

In a possible implementation, the processing unit is further configured to start timing from the start moment of the first time period, and determine that timeout occurs when a time difference exceeds the first time period.

In a possible implementation, the processing unit is further configured to start timing in the slot in which the PSSCH is located, or the 1^{st} symbol in the slot in which the PSSCH is located, or the 1^{st} slot after the PSSCH, or the 1^{st} symbol in the slot after the PSSCH, and the processing unit is configured to determine that timeout occurs when a time difference exceeds the first time period.

In a possible implementation, the processing unit is further configured to stop when receiving the HARQ feedback information in the first time period.

In a possible implementation, the processing unit is further configured to determine a duration of the first time period.

In a possible implementation, the transceiver unit is further configured to send the duration of the first time period to the second terminal device.

In a possible implementation, the transceiver unit is further configured to receive the duration of the first time period from the second terminal device.

For explanations of related content and beneficial effect of the communication apparatus provided in the third aspect, refer to the method shown in the first aspect. Details are not described herein again.

According to a fourth aspect, a communication apparatus is provided. The communication apparatus includes a unit configured to perform the method according to the second aspect. The communication apparatus may be a second terminal device, or may be implemented by a chip or a circuit disposed in the second terminal device. This is not limited in this application.

The communication apparatus includes:
a transceiver unit, configured to receive first information from a first terminal device, where the first information is carried on a physical sidelink shared channel PSSCH, the first terminal device is connected to the second terminal device through a sidelink, the PSSCH corresponds to at least two candidate physical sidelink feedback channel PSFCH resources, and the at least two candidate PSFCH resources are used to send hybrid automatic repeat request HARQ feedback information corresponding to the PSSCH; and the processing unit is configured to determine whether to send the HARQ feedback information to the first terminal device in a first time period, where the first time period indicates a time domain range of the at least two candidate PSFCH resources.

In a possible implementation, the transceiver unit is further configured to receive first indication information from the first terminal device, where the first indication information indicates positions of the at least two candidate PSFCH resources corresponding to the PSSCH. Alternatively, the transceiver unit is further configured to obtain second indication information, where the second indication information indicates that the PSSCH corresponds to the at least two candidate PSFCH resources. Alternatively, the transceiver unit is further configured to obtain a mapping relationship, where the mapping relationship is a correspondence between the PSSCH and the at least two candidate PSFCH resources. The processing unit is further configured to determine, based on the mapping relationship, that the PSSCH corresponds to the at least two candidate PSFCH resources.

In a possible implementation, the processing unit is further configured to determine whether to send the HARQ feedback information to the first terminal device at the positions of the at least two candidate PSFCH resources and/or in the first time period.

In a possible implementation, the processing unit is further configured to perform LBT detection on the at least two candidate PSFCH resources corresponding to the PSSCH, and send the HARQ feedback information at a position of a candidate PSFCH resource on which the LBT detection succeeds.

In a possible implementation, the processing unit is further configured to perform, in a time sequence, LBT detection on the at least two candidate PSFCH resources corresponding to the PSSCH, and send the HARQ feedback information at a position of a 1^{st} candidate PSFCH resource on which the LBT detection succeeds; and the processing unit is further configured to stop the LBT detection.

In a possible implementation, when the LBT detection performed by the second terminal device on the at least two candidate PSFCH resources corresponding to the PSSCH fails, the processing unit is further configured to determine at least one first PSFCH in the first time period. Alternatively, the processing unit is further configured to perform LBT detection on the at least one first PSFCH resource, and send the HARQ feedback information at a position of a first PSFCH resource on which the LBT detection succeeds. Alternatively, the processing unit is further configured to perform LBT detection on the at least one first PSFCH resource in a time sequence, and send the HARQ feedback information at a position of a 1^{st} first PSFCH resource on which the LBT detection succeeds. The processing unit is further configured to stop the LBT detection.

In a possible implementation, the processing unit is further configured to perform, in the first time period starting from a start moment of the first time period, LBT detection on the at least two candidate PSFCH resources corresponding to the PSSCH, and send the HARQ feedback information at a position of a candidate PSFCH resource on which the LBT detection succeeds.

In a possible implementation, the processing unit is further configured to perform, in a time sequence in the first time period starting from a start moment of the first time period, LBT detection on the at least two candidate PSFCH resources corresponding to the PSSCH, and send the HARQ feedback information at a position of a 1^{st} candidate PSFCH resource on which the LBT detection succeeds; and the processing unit is further configured to stop the LBT detection.

In a possible implementation, the method further includes: The processing unit is further configured to determine a start moment of the first time period.

In a possible implementation, the processing unit is further configured to determine the start moment of the first time period based on a time domain position of the PSSCH.

In a possible implementation, the start moment of the first time period is in any one of the following: a slot in which the PSSCH is located, a 1^{st} symbol in the slot in which the PSSCH is located, a 1^{st} slot after the PSSCH, a 1^{st} symbol in a slot after the PSSCH, a slot in which a last candidate PSFCH corresponding to the PSSCH is located, a 1^{st} symbol in the slot in which the last candidate PSFCH corresponding to the PSSCH is located, a 1^{st} slot after the last candidate PSFCH corresponding to the PSSCH, and a 1^{st} symbol in a slot after the last candidate PSFCH corresponding to the PSSCH.

In a possible implementation, the processing unit is further configured to start timing at the start moment of the first time period or at the time domain position of the PSSCH.

In a possible implementation, the processing unit is further configured to start timing from the start moment of the first time period, and determine that timeout occurs when a time difference exceeds the first time period.

In a possible implementation, the processing unit is further configured to start timing in the slot in which the PSSCH is located, or the 1^{st} symbol in the slot in which the PSSCH is located, or the 1^{st} slot after the PSSCH, or the 1^{st} symbol in the slot after the PSSCH, and the processing unit is configured to determine that timeout occurs when a time difference exceeds the first time period.

In a possible implementation, the method further includes: The second terminal device determines a duration of the first time period.

In a possible implementation, the method further includes: The second terminal device sends the duration of the first time period to the first terminal device.

In a possible implementation, the method further includes: The second terminal device receives the duration of the first time period from the first terminal device.

In a possible implementation, the transceiver unit is further configured to send third indication information to the first terminal device, where the third indication information indicates that the LBT detection performed by the second terminal device fails.

For explanations of related content and beneficial effect of the communication apparatus provided in the fourth aspect, refer to the method shown in the second aspect. Details are not described herein again.

According to a fifth aspect, a communication method is provided. The method may be performed by a first terminal device, or may be performed by a component (for example, a chip or a circuit) of the first terminal device. This is not limited. For ease of description, the following uses an example in which the method is performed by the first terminal device for description.

The method may include: The first terminal device sends first information to a second terminal device, where the first information is carried on a physical sidelink shared channel PSSCH, the first terminal device is connected to the second terminal device through a sidelink, the PSSCH corresponds to at least two candidate physical sidelink feedback channel PSFCH resources, and the at least two candidate PSFCH resources are used to send hybrid automatic repeat request HARQ feedback information corresponding to the PSSCH; and the first terminal device determines, based on a first condition and/or a second condition, whether discontinuous transmission DTX occurs, where the first condition is whether the first terminal device receives the HARQ feedback information at positions of the at least two candidate PSFCH resources; and the second condition is whether the first terminal device receives the HARQ feedback information in a first time period, and a duration of the first time period is a maximum duration between sending the PSSCH and receiving the at least two candidate PSFCHs.

Based on the foregoing solution, in an unlicensed spectrum multi-PSFCH scenario, the first terminal device can determine, based on whether the HARQ feedback information corresponding to the PSSCH is received at positions of all PSFCH resources corresponding to PSSCH resources and/or in the first time period, whether the DTX occurs. In comparison with the conventional technology in which it is determined that DTX occurs when HARQ feedback information of a PSFCH is not received only once, thereby improving accuracy of determining the DTX, and improving SL communication quality.

In a possible implementation, the HARQ feedback information includes identification information of the PSSCH. Specifically, the identification information of the PSSCH includes any one of the following: a time domain resource position of the PSSCH, identification information of the first terminal device, and a PSFCH check code.

In a possible implementation, the method may further include: The first terminal device determines, based on the identification information of the PSSCH, the PSSCH corresponding to the first time period.

Based on the foregoing solution, the first terminal device can determine, based on the identification information of the PSSCH in the HARQ feedback information, the PSSCH corresponding to the HARQ feedback information, so that whether the DTX occurs in current PSSCH transmission can be determined based on whether the HARQ feedback information is received.

In a possible implementation, that the first terminal device determines, based on a first condition and/or a second condition, whether DTX occurs includes: When the first terminal device does not receive the HARQ feedback information at the positions of the at least two candidate PSFCH resources, the first terminal device determines that the DTX occurs; or when the first terminal device does not receive the HARQ feedback information in the first time period, the first terminal device determines that the DTX occurs; or when the first terminal device does not receive the HARQ feedback information at the positions of the at least two candidate PSFCH resources, and the first terminal device does not receive the HARQ feedback information in the first time period, the first terminal device determines that the DTX occurs.

In a possible implementation, that the first terminal device determines, based on a first condition and/or a second condition, whether DTX occurs includes: When the first terminal device receives at least one piece of HARQ feedback information at the positions of the at least two candidate PSFCH resources, the first terminal device determines that the DTX does not occur; or when the first terminal device receives at least one piece of HARQ feedback information in the first time period, the first terminal device determines that the DTX occurs; or when the first terminal device does not receive the HARQ feedback information at the positions of the at least two candidate PSFCH resources, and the first terminal device receives at least one piece of HARQ feedback information in the first time period, the first terminal device determines that the DTX does not occur.

In a possible implementation, the method further includes: The first terminal device determines the positions of the at least two candidate PSFCH resources; the first terminal device sends first indication information to the second terminal device, where the first indication information indicates the positions of the at least two candidate PSFCH resources corresponding to the PSSCH; or the first terminal device obtains second indication information, where the second indication information indicates that the PSSCH corresponds to the at least two candidate PSFCH resources; or the first terminal device obtains a mapping relationship, where the mapping relationship is a correspondence between the PSSCH and the at least two candidate PSFCH resources, and the first terminal device determines the at least two candidate PSFCH resources based on the mapping relationship.

Based on the foregoing solution, the first terminal device can learn, based on an indication manner, a mapping manner, or a manner determined by the first terminal device, that the PSSCH corresponds to the at least two candidate PSFCH resources, thereby increasing diversity of solutions for learning that the PSSCH corresponds to the at least two candidate PSFCH resources.

In a possible implementation, the method further includes: The first terminal device receives third indication information from the second terminal device, where the third indication information indicates that the LBT detection performed by the second terminal device fails.

Based on the foregoing solution, the first terminal device can learn, based on the third indication information from the second terminal device, that the second terminal device cannot send the HARQ feedback information because continuous LBT failures occur.

In a possible implementation, the method further includes: The first terminal device determines, based on the third indication information, that the DTX does not occur.

Based on the foregoing solution, the first terminal device can determine, based on the third indication information, that the DTX does not occur in current PSSCH transmission, thereby improving accuracy of determining the DTX.

In a possible implementation, the method further includes: The first terminal device determines a start moment of the first time period.

In a possible implementation, that the first terminal device determines a start moment of the first time period includes: The first terminal device determines the start moment of the first time period based on a time domain position of the PSSCH.

In a possible implementation, the start moment of the first time period is in any one of the following: a slot in which the PSSCH is located, a 1^{st} symbol in the slot in which the PSSCH is located, a 1^{st} slot after the PSSCH, a 1^{st} symbol in a slot after the PSSCH, a slot in which a last candidate PSFCH corresponding to the PSSCH is located, a 1^{st} symbol in the slot in which the last candidate PSFCH corresponding to the PSSCH is located, a 1^{st} slot after the last candidate PSFCH corresponding to the PSSCH, and a 1^{st} symbol in a slot after the last candidate PSFCH corresponding to the PSSCH.

Based on the foregoing solution, the start moment of the first time period may be a plurality of time domain positions, thereby increasing flexibility of the solution for determining the start moment of the first time period.

In a possible implementation, the method further includes: The first terminal device starts timing at the start moment of the first time period or at the time domain position of the PSSCH.

Based on the foregoing solution, the first terminal device can start timing at the plurality of time domain positions, thereby increasing diversity of timing solutions.

In a possible implementation, the method further includes: The first terminal device starts timing from the start moment of the first time period, and determines that timeout occurs when a time difference exceeds the first time period.

In a possible implementation, the method further includes: The first terminal device starts timing in the slot in which the PSSCH is located, or the 1^{st} symbol in the slot in which the PSSCH is located, or the 1^{st} slot after the PSSCH, or the 1^{st} symbol in the slot after the PSSCH, and the first terminal device determines that timeout occurs when a time difference exceeds the first time period.

In a possible implementation, the method further includes: The first terminal device stops timing when receiving the HARQ feedback information in the first time period.

In a possible implementation, the method further includes: The first terminal device determines a duration of the first time period.

Based on the foregoing solution, the first terminal device may determine the duration of the first time period, thereby increasing diversity of solutions for determining the duration of the first time period.

In a possible implementation, the method further includes: The first terminal device sends the duration of the first time period to the second terminal device.

Based on the foregoing solution, the first terminal device may notify the second terminal device of the determined duration of the first time period, thereby increasing diversity of solutions for determining the duration of the first time period.

In a possible implementation, the method further includes: The first terminal device receives the duration of the first time period from the second terminal device.

Based on the foregoing solution, the first terminal device may receive the duration, of the first time period, determined by the second terminal device, thereby increasing diversity of solutions for determining the duration of the first time period.

According to a sixth aspect, a communication method is provided. The method may be performed by a second terminal device, or may be performed by a component (for example, a chip or a circuit) of the second terminal device. This is not limited. For ease of description, the following uses an example in which the method is performed by the second terminal device for description.

The method may include: The second terminal device receives first information from a first terminal device, where the first information is carried on a physical sidelink shared channel PSSCH, the first terminal device is connected to the second terminal device through a sidelink, the PSSCH corresponds to at least two candidate physical sidelink feedback channel PSFCH resources, and the at least two candidate PSFCH resources are used to send hybrid automatic repeat request HARQ feedback information corresponding to the PSSCH; and the second terminal device determines whether to send the HARQ feedback information to the first terminal device at positions of the at least two candidate PSFCH resources and/or in a first time period, where a duration of the first time period is a maximum duration between sending the PSSCH and receiving the at least two candidate PSFCHs.

Based on the foregoing solution, in an unlicensed spectrum multi-PSFCH scenario, the second terminal device can determine whether to send the HARQ feedback information to the first terminal device at a position of a PSFCH resource corresponding to a PSSCH resource and/or in the first time period, so that the first terminal device determines, based on whether the HARQ feedback information corresponding to the PSSCH is received at positions of all PSFCH resources corresponding to PSSCH resources and/or in the first time period, whether DTX occurs. In comparison with the conventional technology in which it is determined that DTX occurs when HARQ feedback information of a PSFCH is not received only once, thereby improving accuracy of determining the DTX, and improving SL communication quality.

In a possible implementation, the HARQ feedback information includes identification information of the PSSCH. Specifically, the identification information of the PSSCH includes any one of the following: a time domain resource position of the PSSCH, identification information of the first terminal device, and a PSFCH check code.

Based on the foregoing solution, the HARQ feedback information sent by the second terminal device includes the identification information of the PSSCH, and the PSSCH corresponding to the HARQ feedback information can be determined based on the identification information of the PSSCH.

In a possible implementation, that the PSSCH corresponds to the at least two candidate PSFCH resources includes: The second terminal device receives first indication information from the first terminal device, where the first indication information indicates positions of the at least two candidate PSFCH resources corresponding to the PSSCH; or the second terminal device obtains second indication information, where the second indication information indicates that the PSSCH corresponds to the at least two candidate PSFCH resources; or the second terminal device obtains a mapping relationship, where the mapping relationship is a correspondence between the PSSCH and the at least two candidate PSFCH resources; and the second terminal device determines the at least two candidate PSFCH resources based on the mapping relationship.

Based on the foregoing solution, the second terminal device can learn, based on an indication manner, a mapping manner, or a manner determined by the first terminal device, that the PSSCH corresponds to the at least two candidate PSFCH resources, thereby increasing diversity of solutions for learning that the PSSCH corresponds to the at least two candidate PSFCH resources.

In a possible implementation, that the second terminal device determines whether to send the HARQ feedback information to the first terminal device at positions of the at least two candidate PSFCH resources and/or in a first time period includes: The second terminal device performs listen before talk LBT detection on the at least two candidate PSFCH resources corresponding to the PSSCH, and sends the HARQ feedback information at a position of a candidate PSFCH resource on which the LBT detection succeeds.

Based on the foregoing solution, the second terminal device determines, by performing LBT detection on all candidate PSFCH resources, whether to send the HARQ feedback information to the first terminal device, thereby increasing a quantity of times that the second terminal device sends the HARQ feedback information.

In a possible implementation, that the second terminal device determines whether to send the HARQ feedback information to the first terminal device at positions of the at least two candidate PSFCH resources and/or in a first time period includes: The second terminal device performs, in a time sequence, LBT detection on the at least two candidate PSFCH resources corresponding to the PSSCH, and sends the HARQ feedback information at a position of a 1^{st} candidate PSFCH resource on which the LBT detection succeeds; and the second terminal device stops the LBT detection.

Based on the foregoing solution, the second terminal device determines, by performing LBT detection on all candidate PSFCH resources in a time sequence, whether to send the HARQ feedback information to the first terminal device, thereby increasing a quantity of times that the second terminal device sends the HARQ feedback information.

In a possible implementation, that the second terminal device determines whether to send the HARQ feedback information to the first terminal device at positions of the at least two candidate PSFCH resources and/or in a first time period includes: When the LBT detection performed by the second terminal device on the at least two candidate PSFCH resources corresponding to the PSSCH fails, the second terminal device determines at least one first PSFCH in the first time period; the second terminal device performs LBT detection on the at least one first PSFCH resource, and sends the HARQ feedback information at a position of a first PSFCH resource on which the LBT detection succeeds; or the second terminal device performs LBT detection on the at least one first PSFCH resource in a time sequence, and sends the HARQ feedback information at a position of a 1^{st} first PSFCH resource on which the LBT detection succeeds; and the second terminal device stops the LBT detection.

Based on the foregoing solution, when the LBT detection performed by the second terminal device on all candidate PSFCH resources fails, the second terminal device can determine a plurality of PSFCHs in one first time period, and then perform LBT detection on the plurality of PSFCHs in the first time period to determine whether to send the HARQ feedback information to the first terminal device, thereby increasing a quantity of times that the second terminal device sends the HARQ feedback information.

In a possible implementation, that the second terminal device determines whether to send the HARQ feedback information to the first terminal device at positions of the at least two candidate PSFCH resources and/or in a first time period includes: The second terminal device performs, in the first time period, LBT detection on the at least two candidate PSFCH resources corresponding to the PSSCH, and sends the HARQ feedback information at a position of a candidate PSFCH resource on which the LBT detection succeeds.

Based on the foregoing solution, the second terminal device determines, by performing LBT detection on all candidate PSFCH resources in the first time period, whether to send the HARQ feedback information to the first terminal device, thereby increasing a quantity of times that the second terminal device sends the HARQ feedback information.

In a possible implementation, that the second terminal device determines whether to send the HARQ feedback information to the first terminal device at positions of the at least two candidate PSFCH resources and/or in a first time period includes: The second terminal device performs, in a time sequence in the first time period, LBT detection on the at least two candidate PSFCH resources corresponding to the PSSCH, and sends the HARQ feedback information at a position of a 1^{st} candidate PSFCH resource on which the LBT detection succeeds; and the second terminal device stops the LBT detection.

Based on the foregoing solution, the second terminal device determines, by performing LBT detection on all candidate PSFCH resources in the first time period in a time sequence, whether to send the HARQ feedback information to the first terminal device, thereby increasing a quantity of times that the second terminal device sends the HARQ feedback information.

In a possible implementation, the method further includes: The second terminal device determines a start moment of the first time period.

In a possible implementation, that the second terminal device determines a start moment of the first time period includes: The second terminal device determines the start moment of the first time period based on a time domain position of the PSSCH.

In a possible implementation, the start moment of the first time period is in any one of the following: a slot in which the PSSCH is located, a 1^{st} symbol in the slot in which the PSSCH is located, a 1^{st} slot after the PSSCH, a 1^{st} symbol in a slot after the PSSCH, a slot in which a last candidate PSFCH corresponding to the PSSCH is located, a 1^{st} symbol in the slot in which the last candidate PSFCH corresponding to the PSSCH is located, a 1^{st} slot after the last candidate PSFCH corresponding to the PSSCH, and a 1^{st} symbol in a slot after the last candidate PSFCH corresponding to the PSSCH.

Based on the foregoing solution, the start moment of the first time period may be a plurality of time domain positions, thereby increasing flexibility for determining the start moment of the first time period.

In a possible implementation, the method further includes: The second terminal device starts timing at the start moment of the first time period or at the time domain position of the PSSCH.

Based on the foregoing solution, the second terminal device can start timing at the plurality of time domain positions, thereby increasing diversity of timing solutions.

In a possible implementation, the method further includes: The second terminal device starts timing from the start moment of the first time period, and determines that timeout occurs when a time difference exceeds the first time period.

In a possible implementation, the method further includes: The second terminal device starts timing in the slot in which the PSSCH is located, or the 1^{st} symbol in the slot in which the PSSCH is located, or the 1^{st} slot after the PSSCH, or the 1^{st} symbol in the slot after the PSSCH, and the second terminal device determines that timeout occurs when a time difference exceeds the first time period.

In a possible implementation, the method further includes: The second terminal device sends third indication information to the first terminal device, where the third indication information indicates that a reason for not receiving the HARQ feedback information at the positions of the at least two candidate PSFCH resources is that the LBT detection performed by the second terminal device fails.

Based on the foregoing solution, the second terminal device can notify, in a manner of sending the third indication information to the first terminal device, the first terminal device that the second terminal device cannot send the HARQ feedback information because continuous LBT failures occur.

According to a seventh aspect, a communication apparatus is provided. The communication apparatus includes a unit configured to perform the method according to the first aspect. The communication apparatus may be a first terminal device, or may be performed by a chip or a circuit disposed in the first terminal device. This is not limited in this application.

The communication apparatus includes:
a transceiver unit, configured to send first information to a second terminal device, where the first information is carried on a physical sidelink shared channel PSSCH, the first terminal device is connected to the second terminal device through a sidelink, the PSSCH corresponds to at least two candidate physical sidelink feedback channel PSFCH resources, and the at least two candidate PSFCH resources are used to send hybrid automatic repeat request HARQ feedback information corresponding to the PSSCH; and a processing unit, configured to determine, based on a first condition and/or a second condition, whether discontinuous transmission DTX occurs, where the first condition is whether the first terminal device receives the HARQ feedback information at positions of the at least two candidate PSFCH resources; and the second condition is whether the first terminal device receives the HARQ feedback information in a first time period, and a duration of the first time period is a maximum duration between sending the PSSCH and receiving the at least two candidate PSFCHs.

In a possible implementation, the HARQ feedback information includes identification information of the PSSCH. Specifically, the identification information of the PSSCH includes any one of the following: a time domain resource position of the PSSCH, identification information of the first terminal device, and a PSFCH check code.

In a possible implementation, the method may further include: The first terminal device determines, based on the identification information of the PSSCH, the PSSCH corresponding to the first time period.

In a possible implementation, when the first terminal device does not receive the HARQ feedback information at the positions of the at least two candidate PSFCH resources, the processing unit is further configured to determine that the DTX occurs; or when the first terminal device does not receive the HARQ feedback information in the first time period, the processing unit is further configured to determine that the DTX occurs; or when the first terminal device does not receive the HARQ feedback information at the positions of the at least two candidate PSFCH resources, and the first terminal device does not receive the HARQ feedback information in the first time period, the processing unit is further configured to determine that the DTX occurs.

In a possible implementation, when the first terminal device receives at least one piece of HARQ feedback information at the positions of the at least two candidate PSFCH resources, the processing unit is further configured to determine that the DTX does not occur; or when the first terminal device receives at least one piece of HARQ feedback information in the first time period, the processing unit is further configured to determine that the DTX occurs; or when the first terminal device does not receive the HARQ feedback information at the positions of the at least two candidate PSFCH resources, and the first terminal device receives at least one piece of HARQ feedback information in the first time period, the processing unit is further configured to determine that the DTX does not occur.

In a possible implementation, the processing unit is further configured to determine the positions of the at least two candidate PSFCH resources. The transceiver unit is further configured to send first indication information to the second terminal device, where the first indication information indicates the positions of the at least two candidate PSFCH resources corresponding to the PSSCH. Alternatively, the transceiver unit is further configured to obtain second indication information, where the second indication information indicates that the PSSCH corresponds to the at least two candidate PSFCH resources. Alternatively, the transceiver unit is further configured to obtain a mapping relationship, where the mapping relationship is a correspondence between the PSSCH and the at least two candidate PSFCH resources. The processing unit is further configured to determine the at least two candidate PSFCH resources based on the mapping relationship.

In a possible implementation, the transceiver unit is further configured to receive third indication information from the second terminal device, where the third indication information indicates that the LBT detection performed by the second terminal device fails.

In a possible implementation, the processing unit is further configured to determine, based on the third indication information, that the DTX does not occur.

In a possible implementation, the processing unit is further configured to determine a start moment of the first time period.

In a possible implementation, the processing unit is further configured to determine the start moment of the first time period based on a time domain position of the PSSCH.

In a possible implementation, the start moment of the first time period is in any one of the following: a slot in which the PSSCH is located, a 1^{st} symbol in the slot in which the PSSCH is located, a 1^{st} slot after the PSSCH, a 1^{st} symbol in a slot after the PSSCH, a slot in which a last candidate PSFCH corresponding to the PSSCH is located, a 1^{st} symbol in the slot in which the last candidate PSFCH corresponding to the PSSCH is located, a 1^{st} slot after the last candidate PSFCH corresponding to the PSSCH, and a 1^{st} symbol in a slot after the last candidate PSFCH corresponding to the PSSCH.

In a possible implementation, the processing unit is further configured to start timing at the start moment of the first time period or at the time domain position of the PSSCH.

In a possible implementation, the processing unit is further configured to start timing from the start moment of the first time period, and determine that timeout occurs when a time difference exceeds the first time period.

In a possible implementation, the processing unit is further configured to start timing in the slot in which the PSSCH is located, or the 1^{st} symbol in the slot in which the PSSCH is located, or the 1^{st} slot after the PSSCH, or the 1^{st} symbol in the slot after the PSSCH, and the processing unit is configured to determine that timeout occurs when a time difference exceeds the first time period.

In a possible implementation, the processing unit is further configured to stop when receiving the HARQ feedback information in the first time period.

In a possible implementation, the processing unit is further configured to determine a duration of the first time period.

In a possible implementation, the transceiver unit is further configured to send the duration of the first time period to the second terminal device.

In a possible implementation, the transceiver unit is further configured to receive the duration of the first time period from the second terminal device.

For explanations of related content and beneficial effect of the communication apparatus provided in the seventh aspect, refer to the method shown in the fifth aspect. Details are not described herein again.

According to an eighth aspect, a communication apparatus is provided. The communication apparatus includes a unit configured to perform the method according to the second aspect. The communication apparatus may be a second terminal device, or may be implemented by a chip or a circuit disposed in the second terminal device. This is not limited in this application.

The communication apparatus includes:
a transceiver unit, configured to receive first information from a first terminal device, where the first information is carried on a physical sidelink shared channel PSSCH, the first terminal device is connected to the second terminal device through a sidelink, the PSSCH corresponds to at least two candidate physical sidelink feedback channel PSFCH resources, and the at least two candidate PSFCH resources are used to send hybrid automatic repeat request HARQ feedback information corresponding to the PSSCH; and a processing unit, configured to determine whether to send the HARQ feedback information to the first terminal device at positions of the at least two candidate PSFCH resources and/or in a first time period, where a duration of the first time period is a maximum duration between sending the PSSCH and receiving the at least two candidate PSFCHs.

In a possible implementation, the transceiver unit is further configured to receive first indication information from the first terminal device, where the first indication information indicates positions of the at least two candidate PSFCH resources corresponding to the PSSCH. Alternatively, the transceiver unit is further configured to obtain second indication information, where the second indication information indicates that the PSSCH corresponds to the at least two candidate PSFCH resources. Alternatively, the transceiver unit is further configured to obtain a mapping relationship, where the mapping relationship is a correspondence between the PSSCH and the at least two candidate PSFCH resources. The processing unit is further configured to determine the at least two candidate PSFCH resources based on the mapping relationship.

In a possible implementation, the processing unit is further configured to perform LBT detection on the at least two candidate PSFCH resources corresponding to the PSSCH, and send the HARQ feedback information at a position of a candidate PSFCH resource on which the LBT detection succeeds.

In a possible implementation, the processing unit is further configured to perform, in a time sequence, LBT detection on the at least two candidate PSFCH resources corresponding to the PSSCH, and send the HARQ feedback information at a position of a 1^{st} candidate PSFCH resource on which the LBT detection succeeds; and the processing unit is further configured to stop the LBT detection.

In a possible implementation, when the LBT detection performed by the second terminal device on the at least two candidate PSFCH resources corresponding to the PSSCH fails, the processing unit is further configured to determine at least one first PSFCH in the first time period. Alternatively, the processing unit is further configured to perform LBT detection on the at least one first PSFCH resource, and send the HARQ feedback information at a position of a first PSFCH resource on which the LBT detection succeeds. Alternatively, the processing unit is further configured to perform LBT detection on the at least one first PSFCH resource in a time sequence, and send the HARQ feedback information at a position of a 1^{st} first PSFCH resource on which the LBT detection succeeds. The processing unit is further configured to stop the LBT detection.

In a possible implementation, the processing unit is further configured to perform, in the first time period, LBT detection on the at least two candidate PSFCH resources corresponding to the PSSCH, and send the HARQ feedback information at a position of a candidate PSFCH resource on which the LBT detection succeeds.

In a possible implementation, the processing unit is further configured to perform, in a time sequence in the first time period, LBT detection on the at least two candidate PSFCH resources corresponding to the PSSCH, and send the HARQ feedback information at a position of a 1^{st} candidate PSFCH resource on which the LBT detection succeeds; and the processing unit is further configured to stop the LBT detection.

In a possible implementation, the method further includes: The processing unit is further configured to determine a start moment of the first time period.

In a possible implementation, the processing unit is further configured to determine the start moment of the first time period based on a time domain position of the PSSCH.

In a possible implementation, the start moment of the first time period is in any one of the following: a slot in which the PSSCH is located, a 1^{st} symbol in the slot in which the PSSCH is located, a 1^{st} slot after the PSSCH, a 1^{st} symbol in a slot after the PSSCH, a slot in which a last candidate PSFCH corresponding to the PSSCH is located, a 1^{st} symbol in the slot in which the last candidate PSFCH corresponding to the PSSCH is located, a 1^{st} slot after the last candidate PSFCH corresponding to the PSSCH, and a 1^{st} symbol in a slot after the last candidate PSFCH corresponding to the PSSCH.

In a possible implementation, the processing unit is further configured to start timing at the start moment of the first time period or at the time domain position of the PSSCH.

In a possible implementation, the processing unit is further configured to start timing from the start moment of the first time period, and determine that timeout occurs when a time difference exceeds the first time period.

In a possible implementation, the processing unit is further configured to start timing in the slot in which the PSSCH is located, or the 1^{st} symbol in the slot in which the PSSCH is located, or the 1^{st} slot after the PSSCH, or the 1^{st} symbol in the slot after the PSSCH, and the processing unit is configured to determine that timeout occurs when a time difference exceeds the first time period.

In a possible implementation, the transceiver unit is further configured to send third indication information to the first terminal device, where the third indication information indicates that the LBT detection performed by the second terminal device fails.

For explanations of related content and beneficial effect of the communication apparatus provided in the eighth aspect, refer to the method shown in the sixth aspect. Details are not described herein again.

According to a ninth aspect, a communication apparatus is provided. The apparatus includes: a memory, configured to store a program; and at least one processor, configured to execute the computer program or instructions stored in the memory, to perform the method according to the possible implementations of the first aspect, the second aspect, the fifth aspect, or the sixth aspect.

In an implementation, the apparatus is a first terminal device.

In another implementation, the apparatus is a chip, a chip system, or a circuit used in the first terminal device.

According to a tenth aspect, this application provides a processor, configured to perform the methods according to the foregoing aspects.

Unless otherwise specified, or if operations such as sending and obtaining/receiving related to the processor do not conflict with actual functions or internal logic in related descriptions, the operations may be understood as operations such as outputting, receiving, and inputting performed by the processor, or may be understood as sending and receiving operations performed by a radio frequency circuit and an antenna. This is not limited in this application.

According to an eleventh aspect, a computer-readable storage medium is provided. The computer-readable storage medium stores program code to be executed by a device, and the program code is used to perform the method according to the possible implementations of the first aspect, the second aspect, the fifth aspect, or the sixth aspect.

According to a twelfth aspect, a computer program product including instructions is provided. When the computer program product is run on a computer, the computer is enabled to perform the method according to the possible implementations of the first aspect, the second aspect, the fifth aspect, or the sixth aspect.

According to a thirteenth aspect, a chip is provided. The chip includes a processor and a communication interface. The processor reads, through the communication interface, instructions stored in a memory, to perform the method according to the possible implementations of the first aspect, the second aspect, the fifth aspect, or the sixth aspect.

Optionally, in an implementation, the chip further includes the memory. The memory stores a computer program or instructions. The processor is configured to execute the computer program or the instructions stored in the memory. When the computer program or the instructions are executed, the processor is configured to perform the method according to the possible implementations of the first aspect, the second aspect, the fifth aspect, or the sixth aspect.

According to a fourteenth aspect, a communication system is provided. The communication system includes one or both of the foregoing first terminal device and the foregoing second terminal device.

### BRIEF DESCRIPTION OF DRAWINGS

FIG. 1 is a diagram of an architecture of a communication system to which an embodiment of this application is applicable;
FIG. 2 is a schematic flowchart of a communication method 200 according to an embodiment of this application;
FIG. 3 is a schematic flowchart of a communication method 300 according to an embodiment of this application;
FIG. 4 is a schematic flowchart of a communication method 400 according to an embodiment of this application;
FIG. 5 is a schematic flowchart of a communication method 500 according to an embodiment of this application;
FIG. 6 is a block diagram of a communication apparatus 600 according to an embodiment of this application;
FIG. 7 is a block diagram of another communication apparatus 700 according to an embodiment of this application; and
FIG. 8 is a diagram of a chip system 800 according to an embodiment of this application.

### DESCRIPTION OF EMBODIMENTS

The following describes technical solutions of embodiments of this application with reference to accompanying drawings.

For ease of understanding of embodiments of this application, the following descriptions are first provided before embodiments of this application are described.

First, in embodiments of this application, "indication" may include a direct indication and an indirect indication, or may include an explicit indication and an implicit indication. Information indicated by a specific message (for example, first indication information described below) is referred to as to-be-indicated information. In a specific implementation process, the to-be-indicated information is indicated in a plurality of manners, for example, but not limited to, a manner of directly indicating the to-be-indicated information. For example, the to-be-indicated information is indicated by using the to-be-indicated information or an index of the to-be-indicated information. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, protocol-specified), to reduce indication overheads to some extent.

Second, the terms "first", "second", and various numeric numbers in the following embodiments are merely used for distinguishing for ease of description, and are not intended to limit the scope of embodiments of this application, for example, for distinguishing between different reference information.

The technical solutions of embodiments of this application may be applied in various communication systems, for example, a global system for mobile communications (Global System for Mobile communications, GSM) system, a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an LTE frequency division duplex (Frequency Division Duplex, FDD) system, an LTE time division duplex (Time Division Duplex, TDD) system, a universal mobile telecommunications system (Universal Mobile Telecommunications System, UMTS), a worldwide interoperability for microwave access (Worldwide Interoperability for Microwave Access, WiMAX) communication system, a 5th generation (5th Generation, 5G) system, or a new radio (New Radio, NR) system.

The technical solutions provided in this application may be further applied to a future communication system, for example, a 6th generation mobile communication system. This is not limited in this application.

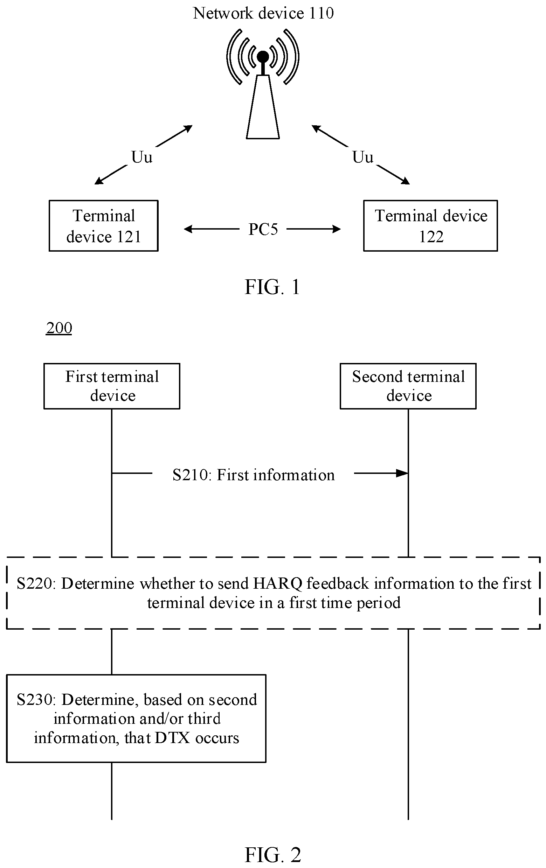

FIG. 1 is a diagram of an architecture of a communication system to which an embodiment of this application is applicable.

In the communication system shown in FIG. 1, there are mainly two communication interfaces: a communication interface (for example, a Uu interface) between a terminal device 121 and a network device 110 and a communication interface (for example, a proximity-based services communication 5 (proximity-based services communication 5, PC5) interface) between the terminal device 121 and a terminal device 122. The Uu interface is used for communication between a user equipment and a base station or a roadside unit, and the PC5 interface is used for sidelink communication between terminals. On the Uu interface, a link used by a terminal to send data to a base station is referred to as an uplink (uplink), and a link used by the terminal to receive data from the base station is referred to as a downlink (downlink). A communication interface between terminals is referred to as the PC5 interface. On the PC5 interface, a link for data transmission between the terminals is referred to as a sidelink (sidelink, SL) or a direct link. The sidelink is usually used in a scenario in which direct communication may be performed between devices, such as device to device (device to device, D2D). In the scenario, data transmission between the devices does not need to be performed through the base station. Vehicle to everything (vehicle to everything, V2X) communication may be considered as a special case of D2D communication.

The following briefly describes the devices shown in FIG. 1.
1. A terminal device may also be referred to as a user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data connectivity for a user, for example, a handheld device or a vehicle-mounted device that has a wireless connection function. Currently, some examples of the terminal are as follows: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a 5G network, a terminal device in a future evolved public land mobile network (public land mobile network, PLMN), or the like. This is not limited in embodiments of this application.

In embodiments of this application, the terminal device may alternatively be a terminal device in an internet of things (internet of things, IoT) system. IoT is an important component in development of future information technologies. A main technical feature of IoT is to connect an object to a network by using a communication technology, to implement an intelligent network of human-machine interconnection and thing-thing interconnection. In this case, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, for example, smart watches or smart glasses, and devices that dedicated to only one type of application function and need to be used together with other devices such as smartphones, for example, various smart bands or smart jewelry for monitoring physical signs.

2. A network device may be a device configured to communicate with the terminal device. The network device may be a base transceiver station (Base Transceiver Station, BTS) in a global system for mobile communications (Global System for Mobile communications, GSM) or a code division multiple access (Code Division Multiple Access, CDMA) system, a NodeB (NodeB, NB) in a wideband code division multiple access (Wideband Code Division Multiple Access, WCDMA) system, an evolved NodeB (Evolved NodeB, eNB or eNodeB) in an LTE system, or a radio controller in a cloud radio access network (Cloud Radio Access Network, CRAN) scenario. Alternatively, the network device may be a relay station, an access point, a vehicle-mounted device, a wearable device, a network device in a future 5G network, a network device in a future evolved PLMN network, or the like. This is not limited in embodiments of this application.

On the Uu interface, data and radio resource control (radio resource control, RRC) signaling are transmitted between the terminal and the base station through a radio bearer. A radio bearer used for data transmission is referred to as a data radio bearer (data radio bearer, DRB), and a bearer used for RRC signaling transmission is referred to as a signaling radio bearer (signaling radio bearer, SRB). One radio bearer includes a packet data convergence protocol (packet data convergence protocol, PDCP) entity and a radio link control (radio link control, RLC) bearer. One RLC bearer includes one RLC entity and a corresponding logical channel (logical channel, LCH). A configuration of the radio bearer is configurations of a PDCP entity, an RLC entity, and a logical channel of the radio bearer. The configuration of the radio bearer needs to meet a quality of service (quality of service, QoS) requirement of a service transmitted through the radio bearer. On the Uu interface, the configuration of the radio bearer is configured by the network device for the terminal.

On the PC5 interface, data and RRC signaling also need to be transmitted between terminals through the radio bearer. The radio bearer on the PC5 interface may be referred to as a sidelink radio bearer (sidelink radio bearer, SL RB). In a long term evolution (long term evolution, LTE) V2X system, radio bearers on the PC5 interface are respectively established by a transmission-end terminal and a reception-end terminal, and configurations of the radio bearers are standard-predefined or are determined by the transmission-end terminal and the reception-end terminal.

For ease of understanding, technical terms in embodiments of this application are first described as follows:

### 1. Licensed spectrum:

The licensed spectrum is a spectrum resource allocated by each country to each operator in the country according to an international rule and planning of the country. Each operator pays a license fee for an exclusive right of the spectrum resource. Each operator has an absolute right to use the resource allocated to the operator, and can meet service requirements of coverage, spectrum efficiency, and reliability.

### 2. Unlicensed spectrum:

The unlicensed spectrum is a shared spectrum, and different operators or organizations can use the unlicensed spectrum. A capacity is increased and data connectivity is improved in some cases, so that the unlicensed spectrum may be used as a supplement to the licensed spectrum. A new radio unlicensed (new radio unlicensed, NR-U) spectrum is a 5G technology that operates in an unlicensed spectrum. A basic design is based on a new radio (new radio, NR) design and combines a regulatory requirement on an unlicensed frequency band.

### 3. Listen before talk (listen before talk, LBT):

To fairly use an unlicensed spectrum, both a terminal device and a network device need an LBT channel detection mechanism before sending data, to contend for using an unlicensed spectrum resource. In the LBT mechanism, when sending a signal (for example, a data signal or a control signal) on a specific channel, a communication device may first detect whether the channel is idle. If the channel is in an idle state, the communication device may send the signal on the channel. If the channel is not in an idle state, the communication device cannot send the signal on the channel. This detection process may be referred to as a clear channel assessment (clear channel assessment, CCA) process or a channel access procedure.

Specifically, LBT is usually performed at a channel granularity, for example, 20 MHz. The LBT mechanism allows a plurality of users to share one channel. There are two results in a process of executing the LBT mechanism: One is that the LBT succeeds (that is, the channel access procedure is completed), and the other is that the LBT fails (that is, the channel access procedure is not completed). The communication device may continuously detect the channel in a period of time by using the LBT mechanism. When the communication device determines, at any time in a specified period of time, that the channel is idle, it is considered that the channel access procedure is completed, that is, the LBT succeeds. When the communication device finds, in a specified period of time, that a channel value is occupied, it is considered that the channel access procedure is not completed, that is, the LBT fails.

Specifically, there are two types of LBT: Type 1 LBT and Type 2 LBT.

In NR-U, before sending data, the communication device needs to perform LBT. A Type 1 LBT channel access procedure may be energy detection based on a fallback mechanism. A window is defined for a specific bandwidth. A range of a quantity of detected slots is defined in the window. The communication device randomly selects a value A in the window (or the value range). After the communication device detects at least A idle energy detection slots, it is considered that a channel is idle, and the communication device can use the idle channel to transmit data. Otherwise, it is considered that the channel is busy, and the communication device does not use the busy channel to transmit data. The idle energy detection indicates that signal energy received in a fixed duration is less than or equal to a preset threshold. When detection is completed in an LBT fallback process and the channel is determined to be idle, if the data is not ready for transmission, the data needs to wait for transmission. Before data transmission, a physical layer further needs to additionally detect a sensing slot of the channel. If a detection result of the sensing slot is also idle, the data is directly sent to an air interface. In other words, the LBT process actually has two phases. In a phase 1, a fallback process is performed; and in a phase 2, a sensing slot of a channel is detected. When both the phases are idle, the data can be sent.

There may be three types of LBT in a Type 2 LBT channel access procedure: Type 2A, Type 2B, and Type 2C. If a time domain gap between a preceding resource and a following resource is at least 25 µs, the network device indicates the terminal device to perform Type 2A LBT, in other words, the terminal device can access a channel in the unlicensed spectrum only when the terminal device needs to sense that the channel is in an idle state for at least 25 µs. If a time domain gap between a preceding resource and a following resource is equal to 16 µs, the network device indicates the terminal device to perform Type 2B LBT, in other words, the terminal device can access a channel in the unlicensed spectrum only when the terminal device needs to sense that the channel is in an idle state for at least 16 µs. If a time domain gap between a preceding resource and a following resource is less than 16 µs, the network device indicates the terminal device to perform Type 2C LBT, in other words, the terminal device directly uses a channel in the unlicensed spectrum.

### 4. Sidelink (sidelink, SL) transmission:

An SL grant (grant) may be scheduled by the base station or selected and obtained by the UE from a configured resource pool. The SL grant is used to determine a group of physical sidelink control channel (physical sidelink control channel, PSCCH) duration(s) and a group of physical sidelink shared channel (physical sidelink shared channel, PSSCH) duration(s). For a physical sidelink feedback channel (physical sidelink feedback channel, PSFCH) resource, the SL grant does not need to be obtained by the UE in advance. A specific PSFCH resource position is mapped by a transmission terminal device (transmission UE, TX UE) based on a resource position at which a PSSCH of the transmission terminal device is located.

### 5. Hybrid automatic repeat request (hybrid automatic repeat request, HARQ) feedback:

For communication in an SL unlicensed spectrum, after the TX UE sends the PSCCH and the PSSCH to an RX UE, the RX UE directly determines a PSFCH resource based on a position of the PSSCH resource and an sl-MinTimeGap PSFCH configured in the resource pool, and further performs LBT on the PSFCH resource. When the LBT succeeds, HARQ feedback information is sent to the TX UE on the PSFCH resource. Correspondingly, the TX UE also receives the HARQ feedback information on the corresponding PSFCH resource.

### 6. Sidelink discontinuous transmission (sidelink discontinuous transmission, SL DTX):

After sending the PSSCH, the TX UE receives the HARQ feedback information at a corresponding PSFCH position. If the TX UE does not receive or detect the HARQ information fed back by the RX UE at the PSFCH resource position, the TX UE considers that one time of DTX occurs, and the TX UE may understand that link quality deteriorates (for example, a distance between UEs becomes longer) and consequently the sent PSSCH is not received by the RX UE.

### 7. Sidelink-unlicensed (sidelink-unlicensed, SL-U) multi-PSFCH mechanism:

In an SL licensed spectrum transmission mechanism, a PSFCH resource position and a PSSCH resource position are in a one-to-one mapping relationship. In an unlicensed spectrum, after the RX UE receives a PSSCH, if the RX UE cannot send the HARQ feedback information at the corresponding PSFCH resource position due to an LBT failure, the TX UE cannot receive the feedback information for the PSSCH. As a result, the TX UE considers that this is one time of DTX. To prevent the RX UE from failing to send the HARQ information due to the LBT failure, the SL-U uses a plurality of PSFCHs to send the HARQ feedback information for a plurality of times, namely, the multi-PSFCH transmission mechanism.

It may be understood that the term "and/or" in this specification describes only an association relationship between associated objects and indicates that three relationships may exist. For example, A and/or B may indicate the following three cases: Only A exists, both A and B exist, and only B exists. In addition, the character "/" in this specification usually indicates an "or" relationship between the associated objects.

The foregoing briefly describes the terms in this application, and details are not described in the following embodiments again. The following describes in detail a communication method provided in embodiments of this application with reference to the accompanying drawings. Embodiments of this application may be applied to the network architecture shown in FIG. 1. This is not limited.

Based on the architecture in FIG. 1, for the SL-U multi-PSFCH mechanism (where for example, one PSSCH resource corresponds to four PSFCH resources), if the RX UE cannot send the HARQ feedback information to the TX UE at first several (for example, first three) PSFCH resource positions due to the LBT failure, the TX UE incorrectly determines the current multi-PSFCH transmission as that the DTX occurs. However, if the RX UE successfully sends the HARQ feedback information to the TX UE at a next (for example, a 4^{th}) PSFCH resource position, it indicates that the PSSCH sent by the TX UE is actually received by the RX UE, that is, the DTX does not occur in the current multi-PSFCH transmission.

Therefore, for the SL-U multi-PSFCH mechanism, the TX UE may easily incorrectly determine a HARQ feedback failure caused by an LBT failure of a PSFCH resource as SL DTX, and even easily trigger a problem of an abnormal SL radio link failure (radio link failure, RLF).

This application provides a communication method, to determine whether SL DTX occurs by detecting HARQ feedback statuses corresponding to all PSFCHs in a multi-PSFCH mechanism, to avoid a problem that in the SL-U multi-PSFCH transmission mechanism, a TX UE incorrectly determines that a HARQ feedback failure caused by an LBT failure of a PSFCH resource is the SL DTX, thereby improving SL communication quality.

The following describes in detail the communication method provided in this application with reference to FIG. 2 to FIG. 5.

FIG. 2 is a diagram of a communication method 200 according to an embodiment of this application. The method 200 may include the following steps.

S210: A first terminal device sends first information to a second terminal device.

Correspondingly, the second terminal device receives the first information from the first terminal device. The first terminal device is connected to the second terminal device through a sidelink.

For example, the first terminal device may be a transmission terminal device (transmission UE, TX UE), and the second terminal device may be a reception terminal device (reception UE, RX UE). This is not limited in this application.

The first information is carried on a first channel.

For example, the first channel may be a channel used to carry information. For example, the first channel may be a PSSCH, the first channel may be a PSBCH, the first channel may be a PSCCH, or the like. This is not limited in this application. It should be understood that in this application, an example in which the first channel is a PSSCH is used for description, that is, an example in which the first information is carried on the PSSCH is used for description.

It should be understood that the first channel corresponds to at least two candidate second channel resources.

For example, a second channel may be a channel used to carry feedback information. For example, the second channel may be a PSFCH. This is not limited in this application. It should be understood that in this application, an example in which the second channel is a PSFCH is used for description, that is, an example in which the PSSCH corresponds to at least two candidate PSFCH resources is used for description.

Optionally, the second channel is used to carry feedback information of the first channel.

For example, the feedback information may be HARQ feedback information, or the feedback information may be measurement report information. This is not limited in this application. It should be understood that in this application, an example in which the feedback information is HARQ feedback information is used for description, that is, an example in which at least two candidate PSFCHs corresponding to the PSSCH are used to carry the HARQ feedback information of the first information is used for description.

It should be noted that in this application, an example in which the first channel is a PSSCH, the second channel is a PSFCH, and the feedback information is HARQ feedback information is used for description. To be specific, the first terminal device sends the first information to the second terminal device, where the first information is carried on the PSSCH, the PSSCH corresponds to the at least two candidate PSFCH resources, and the at least two candidate PSFCH resources are used to send the HARQ feedback information corresponding to the PSSCH.

Optionally, the first terminal device and the second terminal device may learn, in the following several manners, that the PSSCH corresponds to the at least two candidate PSFCH resources.

In a possible implementation, the first terminal device determines positions of the at least two candidate PSFCH resources.

Specifically, the first terminal device determines the positions of the at least two candidate PSFCH resources corresponding to the PSSCH, and sends first indication information to the second terminal device, where the first indication information indicates the positions of the at least two candidate PSFCH resources corresponding to the PSSCH.

In a possible implementation, the first terminal device learns, based on second indication information, that the PSSCH corresponds to the at least two candidate PSFCH resources.

Specifically, a first network device corresponding to the first terminal device determines the second indication information, where the second indication information indicates that the PSSCH corresponds to the at least two candidate PSFCH resources; the first network device sends the second indication information to the first terminal device; and the first terminal device learns, based on the second indication information, that the PSSCH corresponds to the at least two candidate PSFCH resources.

In a possible implementation, the first terminal device and the second terminal device determine, based on a mapping relationship, the at least two candidate PSFCH resources corresponding to the PSSCH.

Specifically, the first terminal device and the second terminal device obtain the mapping relationship, where the mapping relationship is a correspondence between the PSSCH and the at least two candidate PSFCH resources; and the first terminal device and the second terminal device determine the at least two candidate PSFCH resources based on the mapping relationship.

It should be understood that the mapping relationship may be a (pre)configured mapping relationship.

In a possible implementation, the second terminal device determines that the PSSCH corresponds to the at least two candidate PSFCH resources.

Specifically, the second terminal device determines, in a first time period, the at least two candidate PSFCH resources corresponding to the PSSCH.

The first time period indicates the positions of the at least two candidate PSFCH resources.

It should be understood that, the first time period indicating the positions of the at least two candidate PSFCH resources may be understood as that the first time period indicates a time domain range of the at least two candidate PSFCH resources.

Specifically, a duration of the first time period may be from a system-level configuration value, or may be a fixed value (for example, a specified value).

It should be understood that the system-level configuration value may be understood as a unified configuration value of an entire access network. For example, the system-level configuration value is determined by a network device (for example, a base station).

For example, the first time period may be a timer, or the first time period may be a counter. This is not limited in this application.

It should be understood that a start moment of the first time period may be a time domain position at which a 1^{st} PSFCH resource in the positions of the at least two candidate PSFCH resources is located.

It should be understood that an end moment of the first time period may be a time domain position at which a last PSFCH resource in the positions of the at least two candidate PSFCH resources is located.

It should be noted that the first time period may also be referred to as a feedback gap, and a name of the first time period does not limit the protection scope of embodiments of this application.

It should be noted that a manner in which the first terminal device and the second terminal device learn that the PSSCH corresponds to the at least two candidate PSFCH resources is merely an example. This is not limited in this application.

Optionally, in S220, the second terminal device determines whether to send the HARQ feedback information to the first terminal device in the first time period.

Optionally, the HARQ feedback information includes identification information of the PSSCH.

Specifically, the identification information of the PSSCH includes any one of the following: a time domain resource position of the PSSCH, identification information of the first terminal device, and a PSFCH check code.

The time domain resource position of the PSSCH is a position of the PSSCH in time domain.

The identification information of the first terminal device may be an ID, a destination ID (destination ID), or the like of the first terminal device.

The PSFCH check code is a specific check code carried in SCI at a position at which the PSFCH is located, for example, a cyclic redundancy check (cyclic redundancy check, CRC) code.

In a possible implementation, the second terminal device determines whether to send the HARQ feedback information to the first terminal device at the positions of the at least two candidate PSFCH resources.

For example, the second terminal device performs LBT detection on the at least two candidate PSFCH resources corresponding to the PSSCH, and sends the HARQ feedback information at a position of a candidate PSFCH resource on which the LBT detection succeeds.

For example, the second terminal device performs, in a time sequence, LBT detection on the at least two candidate PSFCH resources corresponding to the PSSCH, and sends the HARQ feedback information at a position of a 1^{st} candidate PSFCH resource on which the LBT detection succeeds; and the second terminal device stops the LBT detection.

It should be understood that, when LBT detection on a candidate PSFCH resource (namely, the 1^{st} candidate PSFCH resource on which the LBT detection succeeds) succeeds, the second terminal device no longer performs LBT detection on another candidate PSFCH resource following the candidate PSFCH resource. This may also be understood as that the second terminal device stops the LBT detection in this case.

For example, a specific process in which the second terminal device performs LBT detection on the candidate PSFCH resource may be as follows: The second terminal device continuously detects a channel in a period of time. If the second terminal device determines, at any time in the period of time, that the channel is idle, it is considered that a channel access procedure is completed, that is, the LBT succeeds. If the second terminal device finds, in the period of time, that a channel value is occupied, it is considered that a channel access procedure is not completed, that is, the LBT fails.

It should be noted that the foregoing merely describes how the second terminal device performs the LBT detection on the candidate PSFCH resource by using an example, and does not constitute any limitation on the protection scope of this application. In this embodiment of this application, a specific principle of performing LBT detection on the candidate PSFCH resource by the second terminal device is not limited. For details, refer to current related descriptions of the LBT detection.

In a possible implementation, the second terminal device determines whether to send the HARQ feedback information to the first terminal device in the first time period.

For example, the second terminal device performs, in the first time period, LBT detection on the candidate PSFCH resource corresponding to the PSSCH, and sends the HARQ feedback information at a position of a candidate PSFCH resource on which the LBT detection succeeds.

For example, the second terminal device performs, in a time sequence in the first time period, LBT detection on the candidate PSFCH resource corresponding to the PSSCH, and sends the HARQ feedback information at a position of a 1^{st} candidate PSFCH resource on which the LBT detection succeeds; and the second terminal device stops the LBT detection.

It should be understood that, in the first time period starting from the start moment of the first time period, when LBT detection on a candidate PSFCH resource (namely, the 1^{st} candidate PSFCH resource on which the LBT detection succeeds) succeeds, the second terminal device no longer performs, in the first time period, LBT detection on another candidate PSFCH resource following the candidate PSFCH resource. This may also be understood as that the second terminal device stops the LBT detection in this case.

Optionally, the start moment of the first time period is in any one of the following:
a slot in which the PSSCH is located, a 1^{st} symbol in the slot in which the PSSCH is located, a 1^{st} slot after the PSSCH, and a 1^{st} symbol in a slot after the PSSCH.

In a possible implementation, the second terminal device determines whether to send the HARQ feedback information to the first terminal device at the positions of the at least two candidate PSFCH resources and in the first time period.

For example, the second terminal device performs LBT detection on the at least two candidate PSFCH resources corresponding to the PSSCH. If LBT detection on all candidate PSFCH resources corresponding to the PSSCH fails, the second terminal device determines the start moment of the first time period, and determines at least one first PSFCH in the first time period; and further performs LBT detection on at least one first PSFCH resource, and sends the HARQ feedback information at a position of a first PSFCH resource on which the LBT detection succeeds.

For example, the second terminal device performs, in a time sequence, LBT detection on the at least two candidate PSFCH resources corresponding to the PSSCH. If LBT detection on all candidate PSFCH resources corresponding to the PSSCH fails, the second terminal device determines the start moment of the first time period, and determines at least one first PSFCH in the first time period; and further performs LBT detection on at least one first PSFCH resource in a time sequence, and sends the HARQ feedback information at a position of a 1^{st} first PSFCH resource on which the LBT detection succeeds. After sending the HARQ feedback information at the position of the first PSFCH resource, the second terminal device stops performing LBT detection on another first PSFCH resource.

It should be understood that, in the first time period, when LBT detection on a first PSFCH resource (namely, the 1^{st} first PSFCH resource on which the LBT detection succeeds) succeeds, the second terminal device no longer performs, in the first time period, LBT detection on another first PSFCH resource following the first PSFCH resource. This may also be understood as that the second terminal device stops the LBT detection in this case.

Optionally, the start moment of the first time period is in any one of the following:
a slot in which a last candidate PSFCH corresponding to the PSSCH is located, a 1^{st} symbol in the slot in which the last candidate PSFCH corresponding to the PSSCH is located, a 1^{st} slot after the last candidate PSFCH corresponding to the PSSCH, and a 1^{st} symbol in a slot after the last candidate PSFCH corresponding to the PSSCH.

S230: The first terminal device determines, based on second information and/or third information, that DTX occurs.

The second information is that the first terminal device does not receive the HARQ feedback information at the positions of the at least two candidate PSFCH resources.

The third information is that the first terminal device does not receive the HARQ feedback information in the first time period.

Specifically, the first terminal device determines, based on the second information and/or the third information, that the DTX occurs in the following several manners.

In a possible implementation, the first terminal device determines, based on the second information, that the DTX occurs.

Specifically, when the first terminal device does not receive the HARQ feedback information at the positions of the at least two candidate PSFCH resources, the first terminal device determines that the DTX occurs in the current PSSCH transmission.

In a possible implementation, the first terminal device determines, based on the third information, that the DTX occurs.

Specifically, when the first terminal device does not receive the HARQ feedback information in the first time period, the first terminal device determines that the DTX occurs in the current PSSCH transmission.

In a possible implementation, the first terminal device determines, based on the second information and the third information, that the DTX occurs.

Specifically, when the first terminal device does not receive the HARQ feedback information at the positions of the at least two candidate PSFCH resources, and the first terminal device does not receive the HARQ feedback information in the first time period, the first terminal device determines that the DTX occurs in the current PSSCH transmission.

Based on the foregoing solution, in an unlicensed spectrum multi-PSFCH scenario, the first terminal device (TX UE) can determine, based on whether the HARQ feedback information corresponding to the PSSCH is received at positions of all PSFCH resources corresponding to PSSCH resources and/or in the first time period, whether the DTX occurs. In comparison with the conventional technology in which the TX UE determines that the DTX occurs when the TX UE does not receive the HARQ feedback information of the PSFCH only once, a case in which the second terminal device (RX UE) fails to perform LBT is not considered. This avoids a problem that in an SL-U multi-PSFCH transmission mechanism, the TX UE incorrectly determines that a HARQ feedback failure caused by an LBT failure of a PSFCH resource is SL DTX, thereby improving SL communication quality.

Optionally, when the second terminal device fails to perform LBT on all the at least two candidate PSFCH resources corresponding to the PSSCH determined by the first terminal device, the second terminal device sends third indication information to the first terminal device. The method 200 may further include S240 and S241.

S240: The second terminal device sends the third indication information to the first terminal device.

Correspondingly, the first terminal device receives the third indication information from the second terminal device.

The third indication information indicates that the LBT detection performed by the second terminal device fails.

S241: The first terminal device cancels current DTX determining on the PSSCH based on the third indication information.

Specifically, after receiving the third indication information from the second terminal device, the first terminal device determines, based on the third indication information, that a reason for not receiving the HARQ feedback information at the positions of the at least two candidate PSFCH resources is that LBT performed by the second terminal device fails, that is, the DTX does not occur in the current DTX determining on the PSSCH. In this case, the first terminal device cancels the current DTX counting on the PSSCH.

It should be understood that the first terminal device canceling the current DTX counting on the PSSCH may be understood as that the first terminal device cancels the event that the first terminal device determines that the DTX occurs in the current DTX counting on the PSSCH, that is, does not record the time as that one time of DTX occurs. In other words, the first terminal device cancels the current determining on the reason for the event that the HARQ feedback information is not received at the positions of the at least two candidate PSFCH resources corresponding to the PSSCH as that the DTX occurs. Optionally, the first terminal device and the second terminal device may further determine the start moment of the first time period. The method 200 may further include S250.

S250: The first terminal device and the second terminal device determine the start moment of the first time period.

In a possible implementation, the first terminal device and the second terminal device determine the start moment of the first time period according to a pre-specified protocol.

In a possible implementation, the first terminal device determines the start moment of the first time period based on sending time of the PSSCH, and indicates the start moment to the second terminal device.

For example, the first terminal device determines a specific slot after the PSSCH as the start moment of the first time period, and the first terminal device sends fourth indication information to the second terminal device, where the fourth indication information indicates the start time of the first time period.

Optionally, the start moment of the first time period may be in any one of the following: a slot in which the PSSCH is located, a 1^{st} symbol in the slot in which the PSSCH is located, a 1^{st} slot after the PSSCH, a 1^{st} symbol in a slot after the PSSCH, a slot in which a last candidate PSFCH corresponding to the PSSCH is located, a 1^{st} symbol in the slot in which the last candidate PSFCH corresponding to the PSSCH is located, a 1^{st} slot after the last candidate PSFCH corresponding to the PSSCH, and a 1^{st} symbol in a slot after the last candidate PSFCH corresponding to the PSSCH.

The slot in which the PSSCH is located is a moment indicated by the slot in which the PSSCH is currently located.

The 1^{st} symbol in the slot in which the PSSCH is located is a moment indicated by the 1^{st} symbol in the slot in which the PSSCH is currently located.

The 1^{st} slot after the PSSCH is a moment indicated by a next slot of the PSSCH.

The 1^{st} symbol in the slot after the PSSCH is a moment indicated by a 1^{st} symbol in a next slot of the PSSCH.

The slot in which the last candidate PSFCH corresponding to the PSSCH is located is a moment indicated by the slot in which the last candidate PSFCH in the at least two candidate PSFCHs corresponding to the PSSCH is located.

The 1^{st} symbol in the slot in which the last candidate PSFCH corresponding to the PSSCH is located is a moment indicated by the 1^{st} symbol in the slot in which the last candidate PSFCH in the at least two candidate PSFCHs corresponding to the PSSCH is located.

The 1^{st} slot after the last candidate PSFCH corresponding to the PSSCH is a moment indicated by a next slot of the last candidate PSFCH in the at least two candidate PSFCHs corresponding to the PSSCH.

The 1^{st} symbol in the slot after the last candidate PSFCH corresponding to the PSSCH is a moment indicated by a 1^{st} symbol in a next slot of the last candidate PSFCH in the at least two candidate PSFCHs corresponding to the PSSCH.

It should be noted that a manner in which the first terminal device and the second terminal device may further determine the start moment of the first time period is merely an example. This is not limited in this application. Optionally, the first terminal device and the second terminal device learn of the first time period. The method 200 may further include S260.

S260: The first terminal device learns of a duration of the first time period.

In a possible implementation, the first terminal device determines the duration of the first time period.

Specifically, the first terminal device determines the duration of the first time period, and sends the duration of the first time period to the second terminal device.

Specifically, the duration of the first time period may be from a configuration value of a system-level base station, or may be a fixed value (for example, a specified value).

In a possible implementation, the first terminal device receives the duration of the first time period from the second terminal device.

Specifically, the second terminal device determines the duration of the first time period, and the second terminal device sends the duration of the first time period to the first terminal device.

It should be noted that, for S250 and S260, the first terminal device may simultaneously perform S250 and S260; or the first terminal device may first perform S250 and then perform S260; or the first terminal device may first perform S260 and then perform S250. In this application, no limitation is constituted on a sequence of determining, by the first terminal device and the second terminal device, the start moment of the first time period in S250 and learning, by the first terminal device and the second terminal device, of the duration of the first time period in S260.

Optionally, the first terminal device determines the PSSCH corresponding to the first time period. The method 200 may further include S270.

S270: The first terminal device determines, based on the identification information of the PSSCH, the PSSCH corresponding to the first time period.

Specifically, when the HARQ feedback information received by the first terminal device includes the identification information of the PSSCH, the first terminal device determines, based on the identification information of the PSSCH, the PSSCH corresponding to the current first time period.

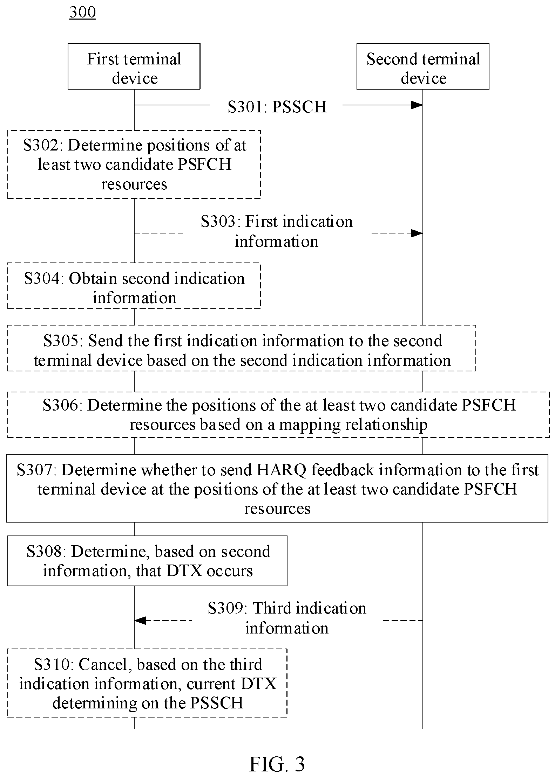

For ease of understanding, the following further describes the communication method described in FIG. 2 with reference to FIG. 3 to FIG. 5. FIG. 3 is a diagram of a communication method 300 according to an embodiment of this application.

For FIG. 3, refer to the descriptions of FIG. 2. When the first terminal device determines, based on the second information, that the DTX occurs, the method 300 shown in FIG. 3 may be used. The method 300 may include the following steps.

S301: A first terminal device sends a PSSCH to a second terminal device.

Correspondingly, the second terminal device receives the PSSCH from the first terminal device.

It should be understood that, the first terminal device sending the PSSCH to the second terminal device may be understood as that the first terminal device sends first information to the second terminal device, where the first information is carried on the PSSCH.

For example, the first terminal device may be a transmission terminal device (transmission UE, TX UE), and the second terminal device may be a reception terminal device (reception UE, RX UE). This is not limited in this application.

The PSSCH corresponds to at least two candidate PSFCH resources, and the at least two candidate PSFCH resources are used to send HARQ feedback information corresponding to the PSSCH.

Optionally, the first terminal device and the second terminal device may learn, in the following several manners, that the PSSCH corresponds to the at least two candidate PSFCH resources.

Manner 1: The first terminal device determines positions of the at least two candidate PSFCH resources, and notifies the second terminal device of the positions by using first indication information. The method 300 may further include S302 and S303.

S302: The first terminal device determines the positions of the at least two candidate PSFCH resources.

Specifically, the first terminal device determines the positions of the at least two candidate PSFCH resources corresponding to the PSSCH.

S303: The first terminal device sends the first indication information to the second terminal device.

Correspondingly, the second terminal device receives the first indication information from the first terminal device.

The first indication information indicates the positions of the at least two candidate PSFCH resources corresponding to the PSSCH.

It should be noted that the first terminal device may include the first indication information in sidelink control information (sidelink control information, SCI) on the PSSCH, and send the sidelink control information to the second terminal device for sending, or the first terminal device may separately send the first indication information to the second terminal device. This is not limited in this application.

Manner 2: The first terminal device obtains indication information indicating that the PSSCH corresponds to the at least two candidate PSFCH resources. The method 300 may further include S304 and S305.

S304: The first terminal device obtains second indication information.

The second indication information indicates that the PSSCH corresponds to the at least two candidate PSFCH resources.

Specifically, a first network device corresponding to the first terminal device determines the second indication information, where the second indication information indicates that the PSSCH corresponds to the at least two candidate PSFCH resources; the first network device sends the second indication information to the first terminal device; and the first terminal device learns, based on the second indication information, that the PSSCH corresponds to the at least two candidate PSFCH resources.

S305: The first terminal device sends the first indication information to the second terminal device based on the second indication information.

Specifically, after receiving the second indication information determined by the first network device corresponding to the first terminal device, the first terminal device learns that the PSSCH corresponds to the at least two candidate PSFCH resources, and further sends the first indication information to the second terminal device, where the first indication information indicates the positions of the at least two candidate PSFCH resources corresponding to the PSSCH.

Manner 3: The first terminal device and the second terminal device determine, based on a mapping relationship, the positions of the at least two candidate PSFCH resources corresponding to the PSSCH.

S306: The first terminal device and the second terminal device determine the positions of the at least two candidate PSFCH resources based on the mapping relationship.

Specifically, the first terminal device and the second terminal device obtain the mapping relationship, where the mapping relationship is a correspondence between the PSSCH and the at least two candidate PSFCH resources; and the first terminal device and the second terminal device determine the at least two candidate PSFCH resources based on the mapping relationship.

It should be understood that the mapping relationship may be a (pre)configured mapping relationship.

It should be noted that a manner in which the first terminal device and the second terminal device learn that the PSSCH corresponds to the at least two candidate PSFCH resources is merely an example. This is not limited in this application.

S307: The second terminal device determines whether to send the HARQ feedback information to the first terminal device at the positions of the at least two candidate PSFCH resources.

Specifically, after receiving the PSSCH from the first terminal device, the second terminal device determines whether to send the HARQ feedback information to the first terminal device at the positions of the at least two candidate PSFCH resources.

Optionally, the HARQ feedback information includes identification information of the PSSCH.

Specifically, the identification information of the PSSCH includes any one of the following: a time domain resource position of the PSSCH, identification information of the first terminal device, and a PSFCH check code.

It should be understood that after the first terminal device receives the HARQ feedback information from the second terminal device, the first terminal device can determine, based on the identification information of the PSSCH in the HARQ feedback information, the PSSCH corresponding to the HARQ feedback information.

In a possible implementation, the second terminal device presets to send the HARQ information at the positions of the at least two candidate PSFCH resources corresponding to the PSSCH; and further the second terminal device performs LBT detection on the at least two candidate PSFCH resources, and sends the HARQ feedback information at a position of a candidate PSFCH resource on which the LBT detection succeeds.

For example, when one PSSCH corresponds to four candidate PSFCH resources, and the second terminal device presets to send the HARQ information at positions of the four candidate PSFCH resources, the second terminal device performs LBT detection on the four candidate PSFCH resources. When LBT detection on three of the four candidate PSFCH resources succeeds, the second terminal device separately sends the HARQ feedback information to the first terminal device at positions of the three candidate PSFCH resources. In other words, in this case, the first terminal device can receive three pieces of HARQ feedback information.

In a possible implementation, the second terminal device performs, in a time sequence, LBT detection on the at least two candidate PSFCH resources corresponding to the PSSCH, and sends the HARQ feedback information at a position of a 1^{st} candidate PSFCH resource on which the LBT detection succeeds. Then, the second terminal device stops the LBT detection.

It should be understood that, when LBT detection on a candidate PSFCH resource (namely, the 1^{st} candidate PSFCH resource on which the LBT detection succeeds) succeeds, the second terminal device does not preset to send the HARQ message at a position of another candidate PSFCH resource following the candidate PSFCH resource. Therefore, the second terminal device does not perform LBT detection on the another candidate PSFCH resource following the candidate PSFCH resource. This may also be understood as that the second terminal device stops the LBT detection in this case.

For example, when one PSSCH corresponds to four candidate PSFCH resources, the second terminal device sequentially performs LBT detection on the four candidate PSFCH resources in a time sequence, and LBT detection on a 2^{nd} candidate PSFCH resource succeeds, the second terminal device sends the HARQ feedback information to the first terminal device at a position of the 2^{nd} candidate PSFCH resource. For a 3^{rd} candidate PSFCH resource and a 4^{th} candidate PSFCH resource, the second terminal device does not preset to send the HARQ message at the position. Therefore, the second terminal device does not perform LBT detection on the 3^{rd} candidate PSFCH resource and the 4^{th} candidate PSFCH resource. In other words, in this case, the first terminal device can receive one piece of HARQ feedback information.

It should be noted that a manner in which the second terminal device determines whether to send the HARQ feedback information to the first terminal device at the positions of the at least two candidate PSFCH resources is merely an example. This is not limited in this application.

S308: The first terminal device determines, based on second information, that DTX occurs.

The second information is that the first terminal device does not receive the HARQ feedback information at the positions of the at least two candidate PSFCH resources.

Specifically, when the first terminal device does not receive the HARQ feedback information at positions of all candidate PSFCH resources corresponding to the PSSCH, the first terminal device determines that the DTX occurs in the current PSSCH transmission.

For example, when one PSSCH corresponds to four candidate PSFCH resources, and the first terminal device does not receive the HARQ feedback information at positions of the four candidate PSFCH resources, the first terminal device determines that the DTX occurs in the current PSSCH transmission.

For example, when one PSSCH corresponds to four candidate PSFCH resources, and the first terminal device does not receive the HARQ feedback information at positions of first three candidate PSFCH resources, and receives the HARQ feedback information at a position of a 4^{th} candidate PSFCH resource, the first terminal device determines that the DTX does not occur in the current PSSCH transmission.

Optionally, when the second terminal device fails to perform LBT on all the at least two candidate PSFCH resources corresponding to the PSSCH, the second terminal device sends third indication information to the first terminal device. The method 300 may further include S309 and S310.

S309: The second terminal device sends the third indication information to the first terminal device.

Correspondingly, the first terminal device receives the third indication information from the second terminal device.

The third indication information indicates that the LBT detection performed by the second terminal device fails.

Specifically, if the second terminal device fails to perform LBT detection on all the at least two candidate PSFCH resources corresponding to the PSSCH, the second terminal device cannot send the HARQ feedback information at the positions of the at least two candidate PSFCH resources. In other words, after the second terminal device successfully communicates with the first terminal device subsequently, the second terminal device sends the third indication information to the first terminal device. After receiving the third indication information, the first terminal device learns, based on the third indication information in the current PSSCH transmission, that a reason for not sending the HARQ feedback information by the second terminal device at the positions of the at least two candidate PSFCH resources corresponding to the PSSCH is that LBT detection performed by the second terminal device fails. In this case, the first terminal device determines that the DTX does not occur in current sending of the PSSCH.

S310: The first terminal device cancels current DTX counting on the PSSCH based on the third indication information.

Specifically, after receiving the third indication information from the second terminal device, the first terminal device determines, based on the third indication information, that a reason for not receiving the HARQ feedback information at the positions of the at least two candidate PSFCH resources is that the LBT detection performed by the second terminal device fails, that is, the DTX does not occur in the current DTX counting on the PSSCH. In this case, the first terminal device cancels the current DTX counting on the PSSCH.

Based on the foregoing solution, in an unlicensed spectrum multi-PSFCH scenario, the first terminal device (TX UE) can determine, based on whether the HARQ feedback information is received at the positions of the at least two candidate PSFCH resources corresponding to the PSSCH, whether the DTX occurs in the current DTX counting. In comparison with the conventional technology in which the TX UE determines that the DTX occurs when the TX UE does not receive the HARQ feedback information of the PSFCH only once, a case in which the second terminal device (RX UE) fails to perform LBT is not considered. This avoids a problem that in an SL-U multi-PSFCH transmission mechanism, the TX UE incorrectly determines that a HARQ feedback failure caused by an LBT failure of a PSFCH resource is SL DTX, thereby improving SL communication quality.

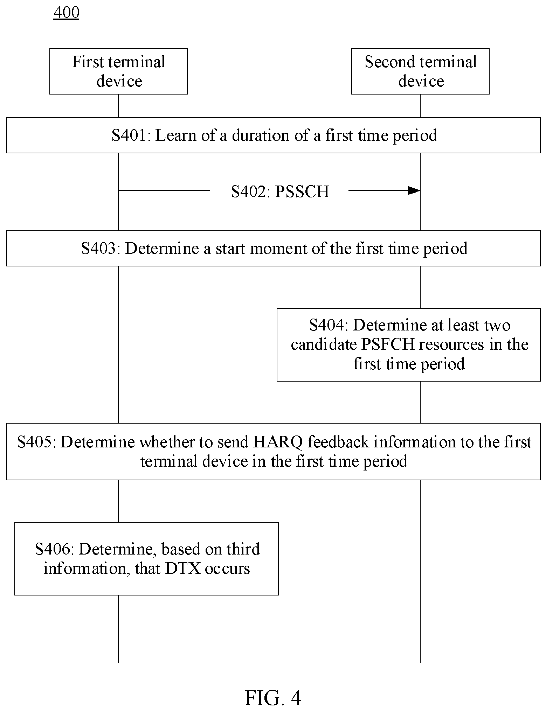

FIG. 4 is a diagram of a communication method 400 according to an embodiment of this application. For FIG. 4, refer to the descriptions of FIG. 2. When the first terminal device determines, based on the third information, that the DTX occurs, the method 400 shown in FIG. 4 may be used. The method 400 may include the following steps.

S401: Learn of a duration of a first time period.

The first time period indicates positions of at least two candidate PSFCH resources.

It should be understood that, the first time period indicating the positions of the at least two candidate PSFCH resources may be understood as that the first time period indicates a time domain range of the at least two candidate PSFCH resources.

It should be noted that, for descriptions of the duration of the first time period in S401, refer to the descriptions in S260. Herein, to avoid repetition, detailed descriptions thereof are omitted.

In a possible implementation, a first terminal device determines the duration of the first time period, and sends the duration of the first time period to a second terminal device.

For example, after the first terminal device determines the duration of the first time period, the first terminal device includes the duration of the first time period in an RRC message and sends the RRC message to the second terminal device. In this case, the duration of the first time period is a configuration value configured by RRC.

In a possible implementation, the second terminal device determines the duration of the first time period, and sends the duration of the first time period to the first terminal device.

For example, after the second terminal device determines the duration of the first time period, the second terminal device includes the duration of the first time period in the RRC message and sends the RRC message to the first terminal device.

For example, the second terminal device includes the duration of the first time period in SCI control information and sends the SCI control information to the first terminal device. In this case, the duration of the first time period is a duration of one first time period that is provided by the SCI and that is for each transmission of the SCI.

It should be noted that the foregoing manner of learning of the duration of the first time period is merely an example. This is not limited in this application.

For example, the first terminal device may be a TX UE, and the second terminal device may be an RX UE. This is not limited in this application.

S402: The first terminal device sends a PSSCH to the second terminal device.

Correspondingly, the second terminal device receives the PSSCH from the first terminal device.

S403: Determine a start moment of the first time period.

Specifically, after the first terminal device sends the PSSCH to the second terminal device, the first terminal device and the second terminal device determine the start moment of the first time period.

It should be noted that when the start moment of the first time period arrives, the first terminal device and the second terminal device start timing.

In a possible implementation, the first terminal device and the second terminal device determine the start moment of the first time period according to a pre-specified protocol.

Optionally, the start moment of the first time period may be in any one of the following: a slot in which the PSSCH is located, a 1^{st} symbol in the slot in which the PSSCH is located, a 1^{st} slot after the PSSCH, and a 1^{st} symbol in a slot after the PSSCH.

In a possible implementation, the first terminal device determines the start moment of the first time period based on sending time of the PSSCH, and indicates the start moment to the second terminal device.

For example, the first terminal device determines a specific slot after the PSSCH as the start moment of the first time period, and the first terminal device sends fourth indication information to the second terminal device, where the fourth indication information indicates the start moment of the first time period.

S404: The second terminal device determines the at least two candidate PSFCH resources in the first time period.

Specifically, after determining the start moment of the first time period, the second terminal device determines, in the first time period starting from the start moment of the first time period, the at least two candidate PSFCH resources corresponding to the PSSCH, where the at least two candidate PSFCH resources are used to send HARQ feedback information corresponding to the PSSCH.

S405: The second terminal device determines whether to send the HARQ feedback information to the first terminal device in the first time period.

Specifically, after timing is started, the second terminal device determines, in the first time period starting from the start moment of the first time period, whether to send the HARQ feedback information to the first terminal device at the position of the candidate PSFCH resource corresponding to the PSSCH.

Optionally, the HARQ feedback information includes identification information of the PSSCH.

It should be noted that, for descriptions of the identification information of the PSSCH in S405, refer to the descriptions in S220. Herein, to avoid repetition, detailed descriptions thereof are omitted.

It should be noted that when the first terminal device and the second terminal device start timing from the start moment of the first time period, the first terminal device and the second terminal device stop timing when a time difference exceeds the first time period.

In a possible implementation, in the first time period starting from the start moment of the first time period, the second terminal device presets to send the HARQ information at the positions of the at least two candidate PSFCH resources corresponding to the PSSCH; and further the second terminal device performs LBT detection on the candidate PSFCH resource corresponding to the PSSCH, and sends the HARQ feedback information at a position of a candidate PSFCH resource on which the LBT detection succeeds.

For example, when the duration of the first time period is 5 seconds, one PSSCH corresponds to four candidate PSFCH resources, the four candidate PSFCH resources are all in the first time period starting from the start moment of the first time period, and the second terminal device presets to send the HARQ information at all positions of the four candidate PSFCH resources, the second terminal device performs LBT detection on all the four candidate PSFCH resources. When LBT detection on three candidate PSFCH resources succeeds in the first time period, the second terminal device separately sends the HARQ feedback information to the first terminal device at positions of the three candidate PSFCH resources. In other words, in this case, the first terminal device can receive three pieces of HARQ feedback information.

In a possible implementation, the second terminal device performs, in a time sequence in the first time period starting from the start moment of the first time period, LBT detection on the at least two candidate PSFCH resources corresponding to the PSSCH, and the second terminal device sends the HARQ feedback information at a position of a 1^{st} candidate PSFCH resource on which the LBT detection succeeds. Then, the second terminal device stops the LBT detection.

For example, when the duration of the first time period is 5 seconds; and in the first time period, one PSSCH corresponds to four candidate PSFCH resources, and the four candidate PSFCH resources are all in the first time period starting from the start moment of the first time period, the second terminal device sequentially performs LBT detection on the four candidate PSFCH resources in the first time period of the 5 seconds in a time sequence. When LBT detection on a 2^{nd} candidate PSFCH resource succeeds, the second terminal device sends the HARQ feedback information to the first terminal device at a position of the 2^{nd} candidate PSFCH resource. For a 3^{rd} candidate PSFCH resource and a 4^{th} candidate PSFCH resource, the second terminal device does not preset to send the HARQ message at the position. Therefore, the second terminal device does not perform LBT detection on the 3^{rd} candidate PSFCH resource and the 4^{th} candidate PSFCH resource. In other words, in this case, the first terminal device can receive one piece of HARQ feedback information.

It should be noted that a manner in which the second terminal device determines, in the first time period, whether to send the HARQ feedback information to the first terminal device is merely an example. This is not limited in this application.

S406: The first terminal device determines, based on third information, that DTX occurs.

The third information is that the first terminal device does not receive the HARQ feedback information in the first time period.

Specifically, when the first terminal device does not receive the HARQ feedback information in the first time period starting from the start moment of the first time period, the first terminal device determines that the DTX occurs in the current PSSCH transmission.

For example, the duration of the first time period is 5 seconds. When the first terminal device does not receive the HARQ feedback information in the first time period of the 5 seconds, the first terminal device determines that the DTX occurs in the current PSSCH transmission.

For example, the duration of the first time period is 5 seconds. When the first terminal device receives at least one piece of HARQ feedback information in the first time period of the 5 seconds, the first terminal device determines that the DTX does not occur in the current PSSCH transmission.

Based on the foregoing solution, in an unlicensed spectrum multi-PSFCH scenario, the first terminal device (TX UE) can determine, in a specific duration negotiated with an RX UE, whether the DTX occurs in the current PSSCH transmission based on whether the HARQ feedback information is received at a position of a candidate PSFCH resource corresponding to the PSSCH in the specific duration and whether the HARQ feedback information is received at positions of all PSFCH resources. In comparison with the conventional technology in which the TX UE determines that the DTX occurs when the TX UE does not receive the HARQ feedback information of the PSFCH only once, a case in which the second terminal device (RX UE) fails to perform LBT is not considered. This avoids a problem that in an SL-U multi-PSFCH transmission mechanism, the TX UE incorrectly determines that a HARQ feedback failure caused by an LBT failure of a PSFCH resource is SL DTX, thereby improving SL communication quality.

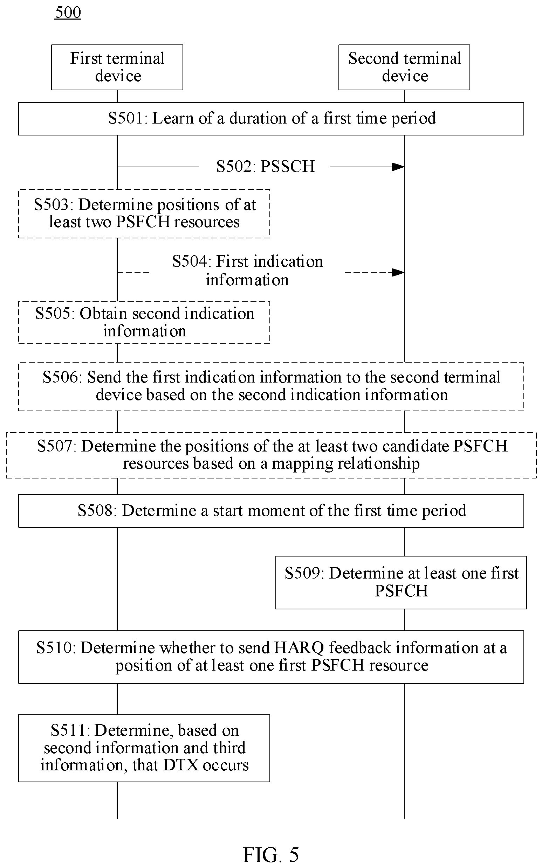

FIG. 5 is a diagram of a communication method 500 according to an embodiment of this application. For FIG. 5, refer to the descriptions of FIG. 2. When the first terminal device determines, based on the second information and the third information, that the DTX occurs, the method 500 shown in FIG. 5 may be used. The method 500 may include the following steps.

S501: Learn of a duration of a first time period.

The first time period indicates positions of at least two candidate PSFCH resources.

It should be noted that a process of learning of the duration of the first time period in S501 is similar to the process in S401. Herein, to avoid repetition, detailed descriptions thereof are omitted.

S502: A first terminal device sends a PSSCH to a second terminal device.

Correspondingly, the second terminal device receives the PSSCH from the first terminal device.

The PSSCH corresponds to the at least two candidate PSFCH resources, and the at least two candidate PSFCH resources are used to send HARQ feedback information corresponding to the PSSCH.

It should be noted that a process in which the first terminal device sends the PSSCH to the second terminal device in S502 is similar to the process in S301. For details, refer to the descriptions in S301. Herein, to avoid repetition, detailed descriptions thereof are omitted.

Optionally, the first terminal device and the second terminal device may learn, in the following several manners, that the PSSCH corresponds to the at least two candidate PSFCH resources.

Manner 1: The first terminal device determines positions of the at least two candidate PSFCH resources, and notifies the second terminal device of the positions by using first indication information. The method 500 may further include S503 and S504.

S503: The first terminal device determines the positions of the at least two candidate PSFCH resources.

Specifically, the first terminal device determines the positions of the at least two candidate PSFCH resources corresponding to the PSSCH.

S504: The first terminal device sends the first indication information to the second terminal device.

Correspondingly, the second terminal device receives the first indication information from the first terminal device.

The first indication information indicates the positions of the at least two candidate PSFCH resources corresponding to the PSSCH.

Manner 2: The first terminal device obtains indication information indicating that the PSSCH corresponds to the at least two candidate PSFCH resources. The method 500 may further include S505 and S506.

S505: The first terminal device obtains second indication information.

The second indication information indicates that the PSSCH corresponds to the at least two candidate PSFCH resources.

Specifically, a first network device corresponding to the first terminal device determines the second indication information, where the second indication information indicates that the PSSCH corresponds to the at least two candidate PSFCH resources; the first network device sends the second indication information to the first terminal device; and the first terminal device learns, based on the second indication information, that the PSSCH corresponds to the at least two candidate PSFCH resources.

S506: The first terminal device sends the first indication information to the second terminal device based on the second indication information.

Specifically, after receiving the second indication information determined by the first network device corresponding to the first terminal device, the first terminal device learns that the PSSCH corresponds to the at least two candidate PSFCH resources, and further the first terminal device sends the first indication information to the second terminal device, where the first indication information indicates the positions of the at least two candidate PSFCH resources corresponding to the PSSCH.

Manner 3: The first terminal device and the second terminal device determine, based on a mapping relationship, the positions of the at least two candidate PSFCH resources corresponding to the PSSCH.

S507: The first terminal device and the second terminal device determine the positions of the at least two candidate PSFCH resources based on the mapping relationship.

Specifically, the first terminal device and the second terminal device obtain the mapping relationship, where the mapping relationship is a correspondence between the PSSCH and the at least two candidate PSFCH resources; and the first terminal device and the second terminal device determine the at least two candidate PSFCH resources based on the mapping relationship.

It should be understood that the mapping relationship may be a (pre)configured mapping relationship.

It should be noted that, for a manner in which the first terminal device and the second terminal device learn that the PSSCH corresponds to the at least two candidate PSFCH resources, that is, for S503 to S507, refer to the descriptions in S302 to S306. Herein, to avoid repetition, detailed descriptions thereof are omitted.

Optionally, the first terminal device includes the first time period in SCI in the PSSCH, and sends the SCI to the second terminal device.

S508: Determine a start moment of the first time period.

Specifically, for the second terminal device, the second terminal device performs LBT detection on the at least two candidate PSFCH resources corresponding to the PSSCH. When LBT detection on all candidate PSFCH resources corresponding to the PSSCH fails, the second terminal device determines the start moment of the first time period. For the first terminal device, when the first terminal device does not receive the HARQ feedback information at positions of all candidate PSFCH resources corresponding to the PSSCH, the first terminal device determines the start moment of the first time period.

In a possible implementation, the first terminal device and the second terminal device determine the start moment of the first time period according to a pre-specified protocol.

Optionally, the start moment of the first time period is in any one of the following:
a slot in which a last candidate PSFCH corresponding to the PSSCH is located, a 1^{st} symbol in the slot in which the last candidate PSFCH corresponding to the PSSCH is located, a 1^{st} slot after the last candidate PSFCH corresponding to the PSSCH, and a 1^{st} symbol in a slot after the last candidate PSFCH corresponding to the PSSCH.

In a possible implementation, the second terminal device determines the start moment of the first time period based on sending time of the PSSCH, and indicates the start moment to the first terminal device.

For example, the second terminal device determines a specific slot after the last candidate PSFCH corresponding to the PSSCH as the start moment of the first time period, and the second terminal device sends fifth indication information to the first terminal device, where the fifth indication information indicates the start moment of the first time period.

Optionally, the first terminal device and the second terminal device start timing at the start moment of the first time period or at a time domain position of the PSSCH.

In a possible implementation, the first terminal device and the second terminal device start timing when the start moment of the first time period arrives.

In a possible implementation, the first terminal device and the second terminal device start timing in the slot in which the PSSCH is located, or the 1^{st} symbol in the slot in which the PSSCH is located, or the 1^{st} slot after the PSSCH, or the 1^{st} symbol in the slot after the PSSCH.

S509: The second terminal device determines at least one first PSFCH.

Specifically, when determining the start moment of the first time period, the second terminal device determines the at least one first PSFCH in the first time period starting from the start moment of the first time period, where the at least one first PSFCH is used to send the HARQ feedback information corresponding to the PSSCH.

S510: The second terminal device determines whether to send the HARQ feedback information to the first terminal device at a position of at least one first PSFCH resource.

Specifically, after determining the at least one first PSFCH in the first time period starting from the start moment of the first time period, the second terminal device performs LBT detection on the at least one first PSFCH resource, to determine whether to send the HARQ feedback information to the first terminal device in the first time period.

Optionally, the HARQ feedback information includes identification information of the PSSCH.

It should be noted that, for descriptions of the identification information of the PSSCH in S510, refer to the descriptions in S220. Herein, to avoid repetition, detailed descriptions thereof are omitted.

It should be understood that after the first terminal device receives the HARQ feedback information from the second terminal device, the first terminal device can determine, based on the identification information of the PSSCH in the HARQ feedback information, the PSSCH corresponding to the HARQ feedback information.

In a possible implementation, the second terminal device performs LBT detection on the at least one first PSFCH resource in the first time period starting from the start moment of the first time period, and sends the HARQ feedback information at a position of a first PSFCH resource on which the LBT detection succeeds.

For example, the second terminal device determines four first PSFCHs in the first time period starting from the start moment of the first time period, and the second terminal device presets to send the HARQ information at positions of the four first PSFCH resources; and further the second terminal device performs LBT detection on the four first PSFCH resources. When LBT detection on three first PSFCH resources succeeds, the second terminal device separately sends the HARQ feedback information to the first terminal device at positions of the three first PSFCH resources. In other words, in this case, the first terminal device can receive three pieces of HARQ feedback information.

In a possible implementation, the second terminal device performs LBT detection on the at least one first PSFCH resource in a time sequence in the first time period starting from the start moment of the first time period, and the second terminal device sends the HARQ feedback information at a position of a 1^{st} first PSFCH resource on which the LBT detection succeeds. Then, the second terminal device stops the LBT detection.

It should be understood that, in the first time period starting from the start moment of the first time period, when LBT detection on a first PSFCH resource (namely, the 1^{st} first PSFCH resource on which the LBT detection succeeds) succeeds, the second terminal device does not preset to send the HARQ message at a position of another first PSFCH resource following the first PSFCH resource. Therefore, the second terminal device does not perform LBT detection on the another first PSFCH resource following the first PSFCH resource. This may also be understood as that the second terminal device stops the LBT detection in this case.

For example, the second terminal device determines four first PSFCHs in the first time period starting from the start moment of the first time period, and the second terminal device sequentially performs LBT detection on the four first PSFCH resources in a time sequence. When LBT detection on a 2^{nd} first PSFCH resource succeeds, the second terminal device sends the HARQ feedback information to the first terminal device at a position of the 2^{nd} first PSFCH resource. For a 3^{rd} first PSFCH resource and a 4^{th} first PSFCH resource, the second terminal device does not preset to send the HARQ message at the position. Therefore, the second terminal device does not perform LBT detection on the 3^{rd} first PSFCH resource and the 4^{th} first PSFCH resource. In other words, in this case, the first terminal device can receive one piece of HARQ feedback information.

It should be noted that a manner in which the second terminal device determines whether to send the HARQ feedback information to the first terminal device at the positions of the at least two candidate PSFCH resources and in the first time period is merely an example. This is not limited in this application.

S511: The first terminal device determines, based on second information and third information, that DTX occurs.

The second information is that the first terminal device does not receive the HARQ feedback information at the positions of the at least two candidate PSFCH resources.

The third information is that the first terminal device does not receive the HARQ feedback information in the first time period.

Specifically, when the first terminal device does not receive the HARQ feedback information at the positions of the at least two candidate PSFCH resources, and the first terminal device does not receive the HARQ feedback information in the first time period starting from the start moment of the first time period, the first terminal device determines that the DTX occurs in the current PSSCH transmission.

Optionally, the first terminal device and the second terminal device start timing from the start moment of the first time period, and determine that timeout occurs when a time difference exceeds the first time period.

Optionally, the first terminal device and the second terminal device start timing in the slot in which the PSSCH is located, or the 1^{st} symbol in the slot in which the PSSCH is located, or the 1^{st} slot after the PSSCH, or the 1^{st} symbol in the slot after the PSSCH, and determine that timeout occurs when a time difference exceeds the first time period.

Optionally, the first terminal device stops timing when receiving the HARQ feedback information in the first time period.

For example, when one PSSCH corresponds to four candidate PSFCH resources, the first terminal device does not receive the HARQ feedback information at positions of the four candidate PSFCH resources corresponding to the PSSCH, and starts timing, the first time period is 5 seconds, and the first terminal device still does not receive the HARQ feedback information in the first time period of the 5 seconds, the first terminal device determines that the DTX occurs in the current PSSCH transmission.

For example, when one PSSCH corresponds to four candidate PSFCH resources, the first terminal device does not receive the HARQ feedback information at positions of the four candidate PSFCH resources corresponding to the PSSCH, and starts timing, a duration of the first time period is 5 seconds, and the first terminal device receives at least one piece of HARQ feedback information in the first time period of the 5 seconds, the first terminal device determines that the DTX does not occur in the current PSSCH transmission.

Based on the foregoing solution, in an unlicensed spectrum multi-PSFCH scenario, the first terminal device (TX UE) can determine, based on whether the HARQ feedback information is received at positions of all PSFCH resources and in a specific duration negotiated with an RX UE, whether the DTX occurs in the current PSSCH transmission based on whether the HARQ feedback information is received at a position of a candidate PSFCH resource corresponding to the PSSCH in the specific duration. In comparison with the conventional technology in which the TX UE determines that the DTX occurs when the TX UE does not receive the HARQ feedback information of the PSFCH only once, a case in which the second terminal device (RX UE) fails to perform LBT is not considered. This avoids a problem that in an SL-U multi-PSFCH transmission mechanism, the TX UE incorrectly determines that a HARQ feedback failure caused by an LBT failure of a PSFCH resource is SL DTX, thereby improving SL communication quality.

It may be understood that the examples in FIG. 2 to FIG. 5 in embodiments of this application are merely intended to help a person skilled in the art understand embodiments of this application, but are not intended to limit embodiments of this application to specific scenarios in the examples. Definitely, a person skilled in the art can make various equivalent modifications or changes based on the examples in FIG. 2 to FIG. 5, and such modifications or changes also fall within the scope of embodiments of this application.

It may be further understood that some optional features in embodiments of this application may be independent of other features in some scenarios, or may be combined with other features in some scenarios. This is not limited.

It may be further understood that the solutions in embodiments of this application may be appropriately combined for use, and explanations or descriptions of terms in embodiments may be mutually referenced or explained in embodiments. This is not limited.

It may be further understood that various numeric sequence numbers in embodiments of this application do not mean execution sequences, but are merely for distinguishing for ease of description, and therefore should not constitute any limitation on an implementation process of embodiments of this application.

It may be further understood that some message names, for example, first indication information or second indication information, are involved in embodiments of this application. It should be understood that the names do not limit the protection scope of embodiments of this application.

It may be further understood that in the foregoing method embodiments, the method and the operation implemented by the terminal device may also be implemented by a component (for example, a chip or a circuit) of the terminal device. In addition, the method and the operation implemented by the network device may also be implemented by a component (for example, a chip or a circuit) of the network device. This is not limited. Corresponding to the methods provided in the foregoing method embodiments, embodiments of this application further provide corresponding apparatuses. The apparatuses include corresponding modules configured to perform the foregoing method embodiments. The module may be software, hardware, or a combination of software and hardware. It may be understood that the technical features described in the method embodiments are also applicable to the following apparatus embodiments.

It should be understood that the first terminal device and the second terminal device may perform some or all steps in the foregoing embodiments. These steps or operations are merely examples. In embodiments of this application, other operations or variations of various operations may be further performed. In addition, the steps may be performed in a sequence different from that presented in the foregoing embodiments, and not all the operations in the foregoing embodiments may need to be performed.

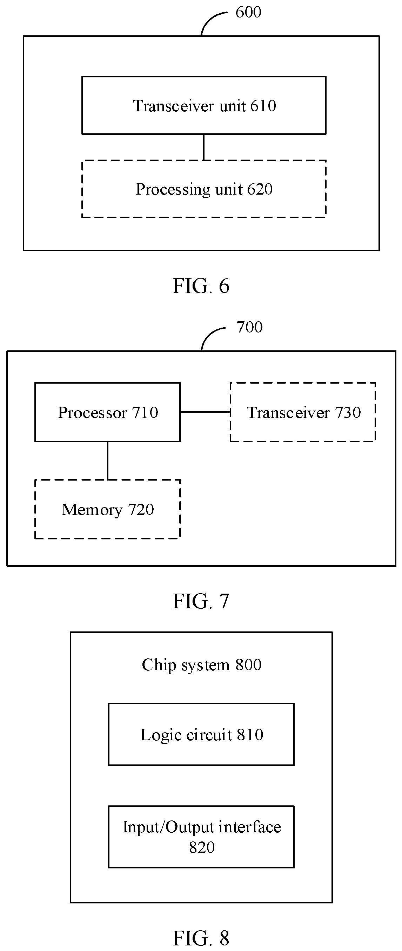

The foregoing describes in detail the communication methods provided in embodiments of this application with reference to FIG. 2 to FIG. 5. The following describes in detail the communication apparatuses provided in embodiments of this application with reference to FIG. 6 to FIG. 8. It should be understood that descriptions of the apparatus embodiments correspond to descriptions of the method embodiments. Therefore, for content that is not described in detail, refer to the foregoing method embodiments. For brevity, some content is not described herein again.

FIG. 6 is a block diagram of a communication apparatus according to an embodiment of this application. The apparatus 600 includes a transceiver unit 610, and the transceiver unit 610 may be configured to implement a corresponding communication function. The transceiver unit 610 may also be referred to as a communication interface or a communication unit.

Optionally, the apparatus 600 may further include a processing unit 620, and the processing unit 620 may be configured to perform data processing.

Optionally, the apparatus 600 further includes a storage unit. The storage unit may be configured to store instructions and/or data. The processing unit 620 may read the instructions and/or the data in the storage unit, so that the apparatus implements actions of different terminal devices in the foregoing method embodiments, for example, actions of the first terminal device or the second terminal device.

The apparatus 600 may be configured to perform actions performed by the first terminal device or the second terminal device in the foregoing method embodiments. In this case, the apparatus 600 may be the first terminal device or the second terminal device, or a component of the first terminal device or the second terminal device. The transceiver unit 610 is configured to perform sending and receiving related operations of the first terminal device or the second terminal device in the foregoing method embodiments. The processing unit 620 is configured to perform a processing related operation of the first terminal device or the second terminal device in the foregoing method embodiments.

It should be further understood that the apparatus 600 herein is embodied in a form of a functional unit. The term "unit" herein may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 600 may be specifically the first terminal device or the second terminal device in the foregoing embodiments, and may be configured to perform procedures and/or steps corresponding to the first terminal device or the second terminal device in the foregoing method embodiments; or the apparatus 600 may be specifically the first terminal device or the second terminal device in the foregoing embodiments, and may be configured to perform procedures and/or steps corresponding to the first terminal device or the second terminal device in the foregoing method embodiments. To avoid repetition, details are not described herein again.

The apparatus 600 in the foregoing solutions has a function of implementing corresponding steps performed by the first terminal device or the second terminal device in the foregoing methods, or the apparatus 600 in the foregoing solutions has a function of implementing corresponding steps performed by the first terminal device or the second terminal device in the foregoing methods. The function may be implemented by hardware, or may be implemented by hardware executing corresponding software. The hardware or the software includes one or more modules corresponding to the foregoing function. For example, the transceiver unit may be replaced by a transceiver (where for example, a sending unit in the transceiver unit may be replaced by a transmitter, and a receiving unit in the transceiver unit may be replaced by a receiver), and another unit, for example, the processing unit, may be replaced by a processor, to respectively perform sending and receiving operations and a processing related operation in the method embodiments.

In addition, the transceiver unit 610 may alternatively be a transceiver circuit (for example, may include a receiving circuit and a sending circuit), and the processing unit may be a processing circuit.

It should be noted that the apparatus in FIG. 6 may be the network element or the device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

As shown in FIG. 7, an embodiment of this application further provides another communication apparatus 700. The apparatus 700 includes a processor 710. The processor 710 is coupled to a memory 720, the memory 720 is configured to store a computer program or instructions and/or data, and the processor 710 is configured to: execute the computer program or the instructions stored in the memory 720, or read the data stored in the memory 720, to perform the methods in the foregoing method embodiments.

Optionally, there are one or more processors 710.

Optionally, there are one or more memories 720.

Optionally, the memory 720 and the processor 710 are integrated together, or are disposed separately.

Optionally, as shown in FIG. 7, the apparatus 700 further includes a transceiver 730, and the transceiver 730 is configured to receive and/or send a signal. For example, the processor 710 is configured to control the transceiver 730 to receive and/or send the signal.

In a solution, the apparatus 700 is configured to implement the operations performed by the first terminal device or the second terminal device in the foregoing method embodiments.

For example, the processor 710 is configured to execute the computer program or the instructions stored in the memory 720, to implement related operations of the first terminal device in the foregoing method embodiments, for example, the first terminal device in any one of the embodiments shown in FIG. 2 to FIG. 5, or the method of the first terminal device in any one of the embodiments shown in FIG. 2 to FIG. 5.

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of an example but not limitations, the RAM includes the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (a storage module) may be integrated into the processor.

It should further be noted that the memory described herein is intended to include, but is not limited to, these and any other appropriate type of memory.

As shown in FIG. 8, an embodiment of this application provides a chip system 800. The chip system 800 (or may be referred to as a processing system) includes a logic circuit 810 and an input/output interface (input/output interface) 820.

The logic circuit 810 may be a processing circuit in the chip system 800. The logic circuit 810 may be coupled and connected to a storage unit, and invoke instructions in the storage unit, so that the chip system 800 can implement the methods and functions in embodiments of this application. The input/output interface 820 may be an input/output circuit in the chip system 800, and outputs information processed by the chip system 800, or inputs to-be-processed data or signaling information to the chip system 800 for processing.

In a solution, the chip system 800 is configured to implement the operations performed by the first terminal device or the second terminal device in the foregoing method embodiments.

For example, the logic circuit 810 is configured to implement a processing related operation performed by the first terminal device in the foregoing method embodiments, for example, a processing related operation performed by the first terminal device in any one of the embodiments shown in FIG. 2 to FIG. 5. The input/output interface 820 is configured to implement sending and/or receiving related operations performed by the first terminal device in the foregoing method embodiments, for example, sending and/or receiving related operations performed by the first terminal device in any one of the embodiments shown in FIG. 2 to FIG. 5.

An embodiment of this application further provides a computer-readable storage medium. The computer-readable storage medium stores computer instructions for implementing the methods performed by the first terminal device or the second terminal device in the foregoing method embodiments.

For example, when the computer program is executed by a computer, the computer is enabled to implement the methods performed by the first terminal device or the second terminal device in the foregoing method embodiments.

An embodiment of this application further provides a computer program product. The computer program product includes instructions. When the instructions are executed by a computer, the method performed by the first terminal device or the second terminal device in the foregoing method embodiments is implemented.

An embodiment of this application further provides a chip. The chip includes a processor and a communication interface. The processor reads, through the communication interface, instructions stored in a memory, to implement the method performed by the first terminal device or the second terminal device in the foregoing method embodiments. For explanations and beneficial effect of related content of any one of the apparatuses provided above, refer to the corresponding method embodiments provided above. Details are not described herein again.

In the several embodiments provided in this application, it should be understood that the disclosed apparatuses and methods may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

All or some of the foregoing embodiments may be implemented by software, hardware, firmware, or any combination thereof. When the software is used to implement embodiments, all or a part of embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like. For example, the foregoing usable medium includes but is not limited to any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
sending first information to a second terminal device, wherein the first information is carried on a physical sidelink shared channel PSSCH, a first terminal device is connected to the second terminal device through a sidelink, the PSSCH corresponds to at least two candidate physical sidelink feedback channel PSFCH resources, and the at least two candidate PSFCH resources are used to send hybrid automatic repeat request HARQ feedback information corresponding to the PSSCH; and
determining, based on second information and/or third information, that discontinuous transmission DTX occurs, wherein
the second information is that the first terminal device does not receive the HARQ feedback information at positions of the at least two candidate PSFCH resources; and
the third information is that the first terminal device does not receive the HARQ feedback information in a first time period, and the first time period indicates a time domain range of the at least two candidate PSFCH resources.

2. The method according to claim 1, wherein the method further comprises:
determining the positions of the at least two candidate PSFCH resources; and sending first indication information to the second terminal device, wherein the first indication information indicates the positions of the at least two candidate PSFCH resources corresponding to the PSSCH; or
obtaining second indication information, wherein the second indication information indicates that the PSSCH corresponds to the at least two candidate PSFCH resources; or
obtaining a mapping relationship, wherein the mapping relationship is a correspondence between the PSSCH and the at least two candidate PSFCH resources; and
determining the at least two candidate PSFCH resources based on the mapping relationship.

3. The method according to claim 1 or 2, wherein the method further comprises:
receiving third indication information from the second terminal device, wherein the third indication information indicates that listen before talk LBT detection performed by the second terminal device fails.

4. The method according to claim 3, wherein the method further comprises:
canceling DTX counting on the PSSCH based on the third indication information.

5. The method according to claim 4, wherein the method further comprises:
determining, based on the third indication information, that a reason for not receiving the HARQ feedback information at the positions of the at least two candidate PSFCH resources is that the LBT detection performed by the second terminal device fails.

6. The method according to any one of claims 1 to 5, wherein the method further comprises:
determining a start moment of the first time period.

7. The method according to claim 6, wherein the determining a start moment of the first time period comprises:
determining the start moment of the first time period based on a time domain position of the PSSCH.

8. The method according to claim 6 or 7, wherein the start moment of the first time period is in any one of the following:
a slot in which the PSSCH is located, a 1^{st} symbol in the slot in which the PSSCH is located, a 1^{st} slot after the PSSCH, a 1^{st} symbol in a slot after the PSSCH, a slot in which a last candidate PSFCH corresponding to the PSSCH is located, a 1^{st} symbol in the slot in which the last candidate PSFCH corresponding to the PSSCH is located, a 1^{st} slot after the last candidate PSFCH corresponding to the PSSCH, and a 1^{st} symbol in a slot after the last candidate PSFCH corresponding to the PSSCH.

9. The method according to any one of claims 1 to 8, wherein the method further comprises:
determining a duration of the first time period.

10. The method according to claim 9, wherein the method further comprises:
sending the duration of the first time period to the second terminal device.

11. The method according to any one of claims 1 to 8, wherein the method further comprises:
receiving a duration of the first time period from the second terminal device.

12. A communication method, comprising:
receiving first information from a first terminal device, wherein the first information is carried on a physical sidelink shared channel PSSCH, the first terminal device is connected to a second terminal device through a sidelink, the PSSCH corresponds to at least two candidate physical sidelink feedback channel PSFCH resources, and the at least two candidate PSFCH resources are used to send hybrid automatic repeat request HARQ feedback information corresponding to the PSSCH; and
determining whether to send the HARQ feedback information to the first terminal device in a first time period, wherein the first time period indicates a time domain range of the at least two candidate PSFCH resources.

13. The method according to claim 12, wherein the determining whether to send the HARQ feedback information to the first terminal device in a first time period comprises:
performing, in a time sequence, LBT detection on the at least two candidate PSFCH resources corresponding to the PSSCH, and sending the HARQ feedback information at a position of a 1^{st} candidate PSFCH resource on which the LBT detection succeeds; and
stopping the LBT detection.

14. The method according to claim 12, wherein the determining whether to send the HARQ feedback information to the first terminal device in a first time period comprises:
when LBT detection performed on the at least two candidate PSFCH resources corresponding to the PSSCH fails, determining at least one first PSFCH in the first time period;
performing LBT detection on the at least one first PSFCH resource, and sending the HARQ feedback information at a position of a first PSFCH resource on which the LBT detection succeeds; or
performing LBT detection on the at least one first PSFCH resource in a time sequence, and sending the HARQ feedback information at a position of a 1^{st} first PSFCH resource on which the LBT detection succeeds; and
stopping the LBT detection.

15. The method according to claim 12, wherein the determining whether to send the HARQ feedback information to the first terminal device in a first time period comprises:
performing, in the first time period starting from a start moment of the first time period, LBT detection on the at least two candidate PSFCH resources corresponding to the PSSCH, and sending the HARQ feedback information at a position of a candidate PSFCH resource on which the LBT detection succeeds.

16. The method according to claim 12, wherein the determining whether to send the HARQ feedback information to the first terminal device in a first time period comprises:
performing, in a time sequence in the first time period starting from a start moment of the first time period, LBT detection on the at least two candidate PSFCH resources corresponding to the PSSCH, and sending the HARQ feedback information at a position of a 1^{st} candidate PSFCH resource on which the LBT detection succeeds; and
stopping the LBT detection.

17. The method according to any one of claims 12 to 16, wherein the method further comprises:
determining the start moment of the first time period.

18. The method according to claim 17, wherein the determining the start moment of the first time period comprises:
determining the start moment of the first time period based on a time domain position of the PSSCH.

19. The method according to claim 17 or 18, wherein the start moment of the first time period is in any one of the following:
a slot in which the PSSCH is located, a 1^{st} symbol in the slot in which the PSSCH is located, a 1^{st} slot after the PSSCH, a 1^{st} symbol in a slot after the PSSCH, a slot in which a last candidate PSFCH corresponding to the PSSCH is located, a 1^{st} symbol in the slot in which the last candidate PSFCH corresponding to the PSSCH is located, a 1^{st} slot after the last candidate PSFCH corresponding to the PSSCH, and a 1^{st} symbol in a slot after the last candidate PSFCH corresponding to the PSSCH.

20. The method according to any one of claims 12 to 19, wherein the method further comprises:
determining a duration of the first time period.

21. The method according to claim 20, wherein the method further comprises:
sending the duration of the first time period to the first terminal device.

22. The method according to claim 12, wherein the method further comprises:
sending third indication information to the first terminal device, wherein the third indication information indicates that the LBT detection performed by the second terminal device fails.

23. A communication apparatus, comprising a transceiver unit and a processing unit, wherein
the transceiver unit is configured to send first information to a second terminal device, wherein the first information is carried on a physical sidelink shared channel PSSCH, the communication apparatus is connected to the second terminal device through a sidelink, the PSSCH corresponds to at least two candidate physical sidelink feedback channel PSFCH resources, and the at least two candidate PSFCH resources are used to send hybrid automatic repeat request HARQ feedback information corresponding to the PSSCH; and
the processing unit is configured to determine, based on second information and/or third information, that discontinuous transmission DTX occurs, wherein
the second information is that the communication apparatus does not receive the HARQ feedback information at positions of the at least two candidate PSFCH resources; and
the third information is that the communication apparatus does not receive the HARQ feedback information in a first time period, and the first time period indicates a time domain range of the at least two candidate PSFCH resources.

24. The apparatus according to claim 23, wherein
the processing unit is further configured to determine the positions of the at least two candidate PSFCH resources; the transceiver unit is further configured to send first indication information to the second terminal device, wherein the first indication information indicates the positions of the at least two candidate PSFCH resources corresponding to the PSSCH; or
the transceiver unit is further configured to obtain second indication information, wherein the second indication information indicates that the PSSCH corresponds to the at least two candidate PSFCH resources; or
the transceiver unit is further configured to obtain a mapping relationship, wherein the mapping relationship is a correspondence between the PSSCH and the at least two candidate PSFCH resources; and
the processing unit is further configured to determine the at least two candidate PSFCH resources based on the mapping relationship.

25. The apparatus according to claim 23 or 24, wherein
the transceiver unit is further configured to receive third indication information from the second terminal device, wherein the third indication information indicates that listen before talk LBT detection performed by the second terminal device fails.

26. The apparatus according to claim 25, wherein
the processing unit is further configured to cancel DTX counting on the PSSCH based on the third indication information.

27. The apparatus according to claim 26, wherein
the processing unit is further configured to determine, based on the third indication information, that a reason for not receiving the HARQ feedback information at the positions of the at least two candidate PSFCH resources is that the LBT detection performed by the second terminal device fails.

28. The apparatus according to any one of claims 23 to 27, wherein
the processing unit is further configured to determine a start moment of the first time period.

29. The apparatus according to claim 28, wherein the processing unit is specifically configured to:
determine the start moment of the first time period based on a time domain position of the PSSCH.

30. The apparatus according to claim 28 or 29, wherein the start moment of the first time period is in any one of the following:
a slot in which the PSSCH is located, a 1^{st} symbol in the slot in which the PSSCH is located, a 1^{st} slot after the PSSCH, a 1^{st} symbol in a slot after the PSSCH, a slot in which a last candidate PSFCH corresponding to the PSSCH is located, a 1^{st} symbol in the slot in which the last candidate PSFCH corresponding to the PSSCH is located, a 1^{st} slot after the last candidate PSFCH corresponding to the PSSCH, and a 1^{st} symbol in a slot after the last candidate PSFCH corresponding to the PSSCH.

31. The apparatus according to any one of claims 23 to 30, wherein
the processing unit is further configured to determine a duration of the first time period.

32. The apparatus according to claim 31, wherein
the transceiver unit is further configured to send the duration of the first time period to the second terminal device.

33. The apparatus according to any one of claims 23 to 30, wherein
the transceiver unit is further configured to receive a duration of the first time period from the second terminal device.

34. A communication apparatus, comprising a transceiver unit and a processing unit, wherein
the transceiver unit is configured to receive first information from a first terminal device, wherein the first information is carried on a physical sidelink shared channel PSSCH, the first terminal device is connected to the communication apparatus through a sidelink, the PSSCH corresponds to at least two candidate physical sidelink feedback channel PSFCH resources, and the at least two candidate PSFCH resources are used to send hybrid automatic repeat request HARQ feedback information corresponding to the PSSCH; and
the processing unit is configured to determine whether to send the HARQ feedback information to the first terminal device in a first time period, wherein the first time period indicates a time domain range of the at least two candidate PSFCH resources.

35. The apparatus according to claim 34, wherein the processing unit is specifically configured to:
perform, in a time sequence, LBT detection on the at least two candidate PSFCH resources corresponding to the PSSCH, and send the HARQ feedback information at a position of a 1^{st} candidate PSFCH resource on which the LBT detection succeeds; and
stop the LBT detection.

36. The apparatus according to claim 34, wherein the processing unit is specifically configured to:
when LBT detection performed on the at least two candidate PSFCH resources corresponding to the PSSCH fails, determine at least one first PSFCH in the first time period;
perform LBT detection on the at least one first PSFCH resource, and send the HARQ feedback information at a position of a first PSFCH resource on which the LBT detection succeeds; or
perform LBT detection on the at least one first PSFCH resource in a time sequence, and send the HARQ feedback information at a position of a 1^{st} first PSFCH resource on which the LBT detection succeeds; and
stop the LBT detection.

37. The apparatus according to claim 34, wherein the processing unit is specifically configured to:
perform, in the first time period starting from a start moment of the first time period, LBT detection on the at least two candidate PSFCH resources corresponding to the PSSCH, and send the HARQ feedback information at a position of a candidate PSFCH resource on which the LBT detection succeeds.

38. The apparatus according to claim 34, wherein the processing unit is specifically configured to:
perform, in a time sequence in the first time period starting from a start moment of the first time period, LBT detection on the at least two candidate PSFCH resources corresponding to the PSSCH, and send the HARQ feedback information at a position of a 1^{st} candidate PSFCH resource on which the LBT detection succeeds; and
stop the LBT detection.

39. The apparatus according to any one of claims 34 to 38, wherein the processing unit is further configured to:
determine the start moment of the first time period.

40. The apparatus according to claim 39, wherein the processing unit is specifically configured to:
determine the start moment of the first time period based on a time domain position of the PSSCH.

41. The apparatus according to claim 39 or 40, wherein the start moment of the first time period is in any one of the following:
a slot in which the PSSCH is located, a 1^{st} symbol in the slot in which the PSSCH is located, a 1^{st} slot after the PSSCH, a 1^{st} symbol in a slot after the PSSCH, a slot in which a last candidate PSFCH corresponding to the PSSCH is located, a 1^{st} symbol in the slot in which the last candidate PSFCH corresponding to the PSSCH is located, a 1^{st} slot after the last candidate PSFCH corresponding to the PSSCH, and a 1^{st} symbol in a slot after the last candidate PSFCH corresponding to the PSSCH.

42. The apparatus according to any one of claims 34 to 41, wherein the processing unit is further configured to:
determine a duration of the first time period.

43. The apparatus according to claim 42, wherein the transceiver unit is further configured to:
send the duration of the first time period to the first terminal device.

44. The apparatus according to claim 34, wherein the transceiver unit is further configured to:
send third indication information to the first terminal device, wherein the third indication information indicates that LBT detection performed by the communication apparatus fails.

45. A communication apparatus, comprising:
a processor, configured to execute a computer program stored in a memory, so that the communication apparatus performs the method according to any one of claims 1 to 22.

46. A communication system, comprising an apparatus for performing the method according to any one of claims 1 to 11 and an apparatus for performing the method according to any one of claims 12 to 22.

47. A computer-readable storage medium, wherein the computer-readable storage medium stores a computer program or instructions; and when the computer program or the instructions are executed by a processor, the method according to any one of claims 1 to 22 is performed.

48. A computer program product comprising instructions, wherein when the computer program product is run on a computer, the method according to any one of claims 1 to 22 is performed.

49. A chip system, comprising a processor, configured to invoke a computer program or instructions from a memory and run the computer program or the instructions, so that a communication apparatus on which the chip system is installed implements the method according to any one of claims 1 to 22.
